(19) Europäisches Patentamt
European Patent Office
Office européen des brevets

(11) EP 4 296 295 B1

(12) **EUROPEAN PATENT SPECIFICATION**

(45) Date of publication and mention of the grant of the patent:
**06.05.2026 Bulletin 2026/19**

(21) Application number: **22756075.2**

(22) Date of filing: **10.02.2022**

(51) International Patent Classification (IPC):
***C08G 64/04*** (2006.01) ***C08G 64/06*** (2006.01)
***C08L 69/00*** (2006.01) ***C09D 169/00*** (2006.01)
***C09D 11/02*** (2014.01) ***C09D 11/102*** (2014.01)
***B29C 64/112*** (2017.01) ***B29C 64/124*** (2017.01)
***C09D 7/63*** (2018.01) ***B33Y 70/00*** (2020.01)
***C08J 5/18*** (2006.01) ***C08K 5/04*** (2006.01)
***C08K 5/06*** (2006.01) ***C09D 7/20*** (2018.01)
***C09D 11/033*** (2014.01)

(52) Cooperative Patent Classification (CPC):
(C-Sets available)
**C09D 7/20; B33Y 70/00; C08J 5/18; C08K 5/06; C08L 69/00; C09D 11/033; C09D 11/102; C09D 169/00;** B29C 64/124; C08G 64/04; C08G 64/06; C08J 2369/00; C08K 5/04 (Cont.)

(86) International application number:
**PCT/JP2022/005260**

(87) International publication number:
**WO 2022/176755 (25.08.2022 Gazette 2022/34)**

# (54) RESIN COMPOSITION, AND PRINTING INK AND ELECTROCONDUCTIVE PASTE EACH USING SAME

HARZZUSAMMENSETZUNG SOWIE DRUCKTINTE UND ELEKTRISCH LEITFÄHIGE PASTE DAMIT

COMPOSITION DE RÉSINE, AINSI QU'ENCRE D'IMPRESSION ET PÂTE ÉLECTROCONDUCTRICE UTILISANT CHACUNE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2021 JP 2021023321**
**24.09.2021 JP 2021155162**

(43) Date of publication of application:
**27.12.2023 Bulletin 2023/52**

(73) Proprietor: **MITSUBISHI GAS CHEMICAL COMPANY, INC.**
**Chiyoda-ku**
**Tokyo 100-8324 (JP)**

(72) Inventors:
- **GOTO, Toshihito**
  **Kamisu-shi, Ibaraki 314-0102 (JP)**
- **OGAWA, Noriyoshi**
  **Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 116 751**
**WO-A1-2015/146659**
**WO-A1-2020/189598**
**CN-A- 105 223 776**
**JP-A- 2011 122 157**
**JP-A- 2013 050 699**
**JP-A- 2014 160 238**
**JP-A- 2015 515 507**
**JP-A- 2020 117 610**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/06, C08L 69/00;**
**C08L 69/00, C08L 71/02**

## Description

### TECHNICAL FIELD

The present invention relates to a resin composition having low toxicity and excellent stability (no penetration) and uniformity on a base material when applied, to a more concentrated polycarbonate resin solution, and to a printing ink, resin solution for 3D printers, electroconductive paste, coating solution, and film using the same.

### BACKGROUND ART

Certain polycarbonate resins dissolved in organic solvents are known for their use as inks and paints, and various organic solvents are used for this purpose. In recent years, there has been a shift from solvents with safety concerns for humans such as halogenated organic solvents, toluene, and 1,4-dioxane, to safer solvents (see Patent literature 1). Further compositions of polycarbonates with solvents or related components, are also described in Patent literatures 2, 3, 4 and 5.

Furthermore, there is a need to improve the productivity of a coating film and the quality of a coating film including stability (no penetration) and uniformity on a base material. In addition, in order to take advantage of the property of a high-strength polycarbonate resin, a more concentrated polycarbonate resin solution is required.

### PRIOR ART LITERATURE

#### Patent literature

Patent literature 1: International Publication WO2018/123282
Patent literature 2: CN 105 223 776 A
Patent literature 3: JP 2013 050699 A
Patent literature 4: JP 2014 160238 A
Patent literature 5: EP 1 116 751 A1


### SUMMARY OF INVENTION

#### Problem to be solved by the invention

The present invention has an objective of providing a resin composition having low toxicity and excellent stability (no penetration) and uniformity on a base material when applied. The present invention also has an objective of providing a more concentrated polycarbonate resin solution.

#### Means for solving the problem

As a result of diligent study to solve the above problem, the present inventors have found that a resin composition with low toxicity and excellent stability (no penetration) and uniformity on a base material when applied can be obtained by dissolving a polycarbonate resin containing a specific structural unit in a specific organic solvent, thereby accomplishing the present invention. In addition, the present inventors found that a more concentrated polycarbonate resin solution can be obtained by combining a specific polycarbonate resin containing a fluorine atom with a specific hydroxy compound, thereby accomplishing the present invention.

Thus, the present invention is as specified in the appended independent claims with preferred embodiments being specified in the appended dependent claims.

### EFFECTS OF THE INVENTION

In a resin composition according to a preferred aspect of the present invention, a glycol-based solvent, which is a weak solvent, is used, and therefore, the resin composition is less likely to bite into a base material such as a polycarbonate (hereinafter, sometimes referred to as "PC") sheet, etc., when applied, and can form a precise and strong coating film surface with little bleed. In addition, glycol-based solvents are generally low in toxicity and odor, so they are advantageous for application to paints for screen printing and optical components from the viewpoint of working environment, and are suitable as various kinds of inks, paints, electroconductive pastes, and resin compositions for 3D printers. Furthermore, a

resin composition according to another preferred aspect of the present invention can be used to provide a more concentrated polycarbonate resin solution, which is suitable for use in technical fields where high concentration is required.

MODE FOR CARRYING OUT THE INVENTION

[Resin composition of first embodiment]

A resin composition of a first embodiment of the present invention comprises a solvent represented by General formula (1) below and a polycarbonate resin containing a structural unit (a) represented by General formula (A) below (except for a polycarbonate homopolymer composed solely of a structural unit represented by Formula (i) below.)

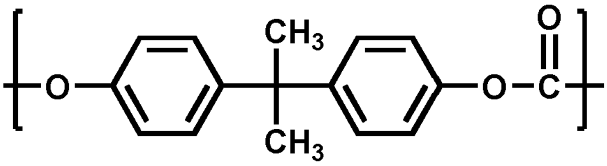

(i)

As will be described in Comparative example 1 below, a polycarbonate homopolymer obtained by using 2,2-bis(4-hydroxyphenyl)propane (hereinafter sometimes referred to as "BPA") alone as a raw material diol component is not soluble in a glycol-based solvent used in the present invention. Therefore, this resin cannot be used. However, as will be described in Example 8 below, even if BPA is used as a raw material diol component, when it is used together with other diol component defined by the present invention to make a polycarbonate copolymer, it is possible to use this copolymer.

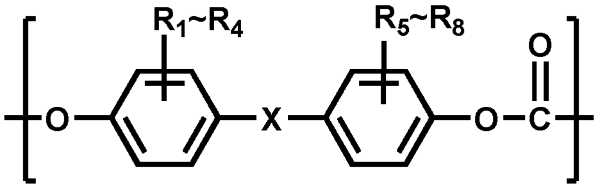

(A)

In General formula (A),

$R_1$-$R_8$ each independently represent hydrogen, fluorine, chlorine, bromine, iodine, or an optionally substituted C1-C7 alkyl group, C6-C12 aryl group, C2-C7 alkenyl group, C1-C7 alkoxy group or C7-C17 aralkyl group.
Herein, examples of a "substituent" implied by the phrase "optionally substituted" include "a fluorine atom, a chlorine atom, a bromine atom, an iodine atom, a C1-C7 alkyl group, a C6-C12 aryl group, a C2-C7 alkenyl group, a C1-C5 alkoxy group, a C7-C17 aralkyl group" and the like (the same applies hereinafter.)
X represents -O-, -S-, -SO-, $-SO_2-$, -CO-, or a divalent group represented by any of Formulae (2)-(4) below.

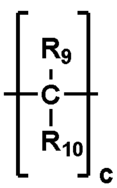

(2)

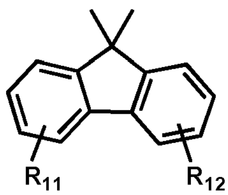

(3)

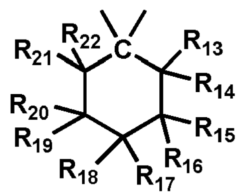

(4)

In Formulae (2)-(4),

$R_9$ and $R_{10}$ each independently represent hydrogen, a halogen, or an optionally substituted C1-C20 alkyl group, C1-C5 alkoxy group, C6-C12 aryl group, C7-C17 aralkyl group or C2-C15 alkenyl group, or $R_9$ and $R_{10}$ bind to each other to form a C3-C20 carbon ring or a C1-C20 heterocyclic ring, and
c represents an integer from 0 to 20.
$R_{11}$ and $R_{12}$ each independently represent hydrogen, a halogen, or an optionally substituted C1-C20 alkyl group, C1-C5 alkoxy group, C6-C12 aryl group, C7-C17 aralkyl group or C2-C15 alkenyl group, or $R_{11}$ and $R_{12}$ bind to each other to form a C3-C20 carbon ring or a C1-C20 heterocyclic ring.
$R_{13}$-$R_{22}$ each independently represent hydrogen or a C1-C3 alkyl group.

In the first embodiment of the present invention, the structural unit (a) represented by General formula (A) above includes one or more selected from the group consisting of structural units represented by Formulae (E)-(G) below.

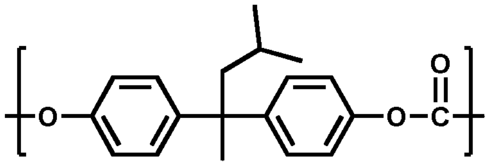
(E)

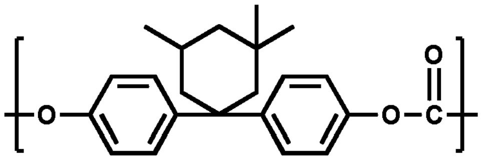
(F)

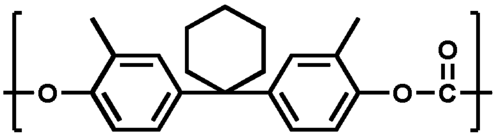
(G)

<Polycarbonate resin>

The polycarbonate resin used in the resin composition of the first embodiment can be produced by reacting a bisphenol that generates the structural unit (a) represented by General formula (A) above with a carbonate ester-forming compound. Thus, the polycarbonate resin can be produced by employing a known method for producing a bisphenol A-derived polycarbonate resin, such as direct reaction between a bisphenol and phosgene (phosgene method) or transesterification reaction between a bisphenol and a bisaryl carbonate (transesterification method).

The bisphenol used as a raw material monomer of the polycarbonate resin used in the resin composition of the first embodiment of the present invention is a bisphenol represented by General formula (A') below.

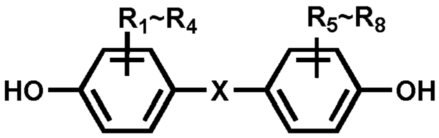
(A')

(wherein, $R_1$-$R_4$, $R_5$-$R_8$ and X are the same as those in General formula (A), respectively.)

Specifically, the monomer represented by General formula (A') above includes one or more of 1,1-bis(4-hydroxy-3-methylphenyl)cyclohexane, 3,3,5-trimethyl-1,1-bis(4-hydroxyphenyl)cyclohexane, and 3,3,5-trimethyl-1,1-bis(4-hydroxyphenyl)cyclohexane. Examples of optional monomers represented by General formula (A') above include 4,4'-biphenyldiol, bis(4-hydroxyphenyl)methane, bis(2-hydroxyphenyl)methane, 2,4'-dihydroxydiphenylmethane, bis(4-hydroxyphenyl)ether, bis(4-hydroxyphenyl)sulfone, 2,4'-dihydroxydiphenylsulfone, bis(2-hydroxyphenyl)sulfone, bis(4-hydroxy-3-methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 1,1-bis(4-hydroxyphenyl)-1-phenylethane, bis(4-hydroxyphenyl)diphenylmethane, 2,2-bis(4-hydroxyphenyl)propane, 2,2-bis(4-hydroxy-3-methylphenyl)propane, 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane, 2,2-bis(4-hydroxyphenyl)hexafluoropropane, 1,1-bis(4-hydroxyphenyl)cyclohexane, 1,1-bis(4-hydroxyphenyl)cycloundecane, 1,1-bis(4-hydroxyphenyl)cyclododecane, 2,2-bis(4-hydroxy-3-allylphenyl)propane, 9,9-bis(4-hydroxy-3-ethylphenyl)fluorene, 9,9-bis(4-hydroxy-3-methylphenyl)fluorene, 9,9-bis(4-hydroxyphenyl)fluorene, $\alpha,\omega$-bis[3-(o-hydroxyphenyl)propyl]polydimethyldiphenyl random copolymer siloxane, $\alpha,\omega$-bis[3-(o-hydroxyphenyl)propyl] polydimethylsiloxane, 4,4'-[1,4-phenylene bis(1-methylethylidene) bisphenol, 4,4'-[1,3-phenylene bis(1-methylethylidene)]bisphenol, 2,2-bis(4-hydroxyphenyl)butane, 1,1-bis(4-hydroxyphenyl)-2-ethylhexane, 1,1-bis(4-hydroxyphenyl)-2-methylpropane, , 1,1-bis(4-hydroxyphenyl)decane, and 1,3-bis(4-hydroxyphenyl)-5,7-dimethyladamantane. It is also possible to use two or more kinds of them in combination.

Among them, 3,3,5-trimethyl-1,1-bis(4-hydroxyphenyl)cyclohexane (TMC), and 2,2-bis(4-hydroxyphenyl)-4-methylpentane (MIBK) are particularly preferred.

According to the phosgene method, in general, a monomer represented by General formula (A') above is reacted with phosgene in the presence of an acid-binding agent and a solvent. For example, a pyridine, a hydroxide of an alkali metal such as sodium hydroxide or potassium hydroxide, or the like may be used as the acid-binding agent while methylene chloride, chloroform, or the like may be used as the solvent. In addition, in order to accelerate the condensation polymerization reaction, it is preferable to add a catalyst, for example, a tertiary amine such as triethylamine or a quaternary ammonium salt such as benzyltriethylammonium chloride. Furthermore, for adjusting the degree of polymerization, a monofunctional compound such as phenol, p-t-butylphenol, p-cumylphenol, p-hydroxyphenethyl alcohol, 2-[2-hydroxy-5-[2-(methacryloyloxy)ethyl]phenyl]-2H-benzotriazole or a long-chain alkyl-substituted phenol is preferably added as a molecular weight regulator. Moreover, an antioxidant such as sodium sulfite or hydrosulfite, and a branching agent such as phloroglucin or isatin bisphenol may also be added in small amounts if desired. The reaction temperature is usually in the range of 0-150°C, preferably 5-40°C. While the reaction time depends on the reaction temperature, it is usually 0.5 minutes to 10 hours, preferably 1 minute to 2 hours. The pH of the reaction system is desirably kept at 10 or higher during the reaction.

Alternatively, according to the transesterification method, a monomer represented by General formula (A') above is mixed with a bisaryl carbonate and reacted at high temperature under reduced pressure. Examples of the bisaryl carbonate include bisallyl carbonate such as diphenyl carbonate, di-p-tolyl carbonate, phenyl-p-tolyl carbonate, di-p-chlorophenyl carbonate, and dinaphthyl carbonate. It is also possible to use two or more kinds of these compounds in combination. The reaction is usually carried out at a temperature in the range of 150-350°C, preferably 200-300°C, and the final degree of pressure reduction is preferably 1 mmHg or lower to distill phenols derived from the bisaryl carbonate generated by the transesterification reaction away from the system. While the reaction time depends on the reaction temperature and the degree of pressure reduction, it is usually about 1-24 hours. The reaction is preferably performed under an inert gas atmosphere such as nitrogen or argon. In addition, if desired, a molecular weight regulator, antioxidant, and branching agent may be added to perform the reaction.

The polycarbonate resin used in the resin composition of the first embodiment of the present invention preferably retains solvent solubility, coating property, peelability, scratch resistance, impact resistance, and the like that are required as a coating film-forming resin in a good balance. By setting the lower limit of the intrinsic viscosity of the resin equal to or higher than a predetermined value, scratch resistance and anti-impact strength can be enhanced, and by setting the upper limit of the intrinsic viscosity equal to or lower than a predetermined value, the decrease in solvent solubility and the increase in solution viscosity can be suppressed, thereby maintaining the coating property. The intrinsic viscosity ($\eta$) of the polycarbonate resin is preferably in the range of 0.3-2.0 dl/g, and still more preferably in the range of 0.35-1.5 dl/g. Meanwhile, the viscosity-average molecular weight (Mv) of the polycarbonate resin is preferably in the range of 10,000-80,000, and still more preferably in the range of 15,000-50,000. The intrinsic viscosity ($\eta$) and viscosity-average molecular weight (Mv) of the polycarbonate resin can be measured by the methods described in the example below.

The mass ratio of the above solvent to the above polycarbonate resin in the resin composition of the first embodiment of the present invention (solvent/polycarbonate resin) is preferably 99.99/0.01 to 50/50, more preferably 99/1 to 60/40, and still more preferably 95/5 to 70/30. As long as the amounts of the solvent and polycarbonate resin used in the present invention are within such a range, solvent solubility and coating property will be well balanced, and workability and appearance will be improved.

<Glycol-based organic solvent>

The resin composition of the first embodiment of the present invention is a solution of the above-mentioned polycarbonate resin dissolved in a solvent represented by General formula (1) below (glycol-based organic solvent). In this state, the solution is a paint generally called a clear color. The resin composition of the first embodiment of the present invention can also be made into a colored paint composition by further dissolving or dispersing a desired dye and/or pigment.

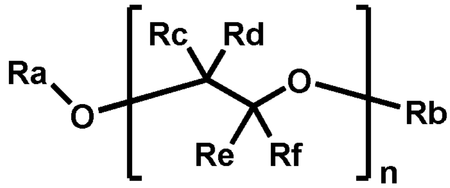

(1)

(In General formula (1),

$R_a$ represents hydrogen, or an optionally substituted C1-C20 alkyl group, C6-C20 aryl group, C2-C20 alkenyl group, C7-C20 aralkyl group or C2-C20 acyl group. Preferably, $R_a$ represents hydrogen, a C1-C6 alkyl group, or a C2-C6 acyl group.

$R_b$ represents an optionally substituted C1-C20 alkyl group, C6-C20 aryl group, C2-C20 alkenyl group, C7-C20 aralkyl group or C2-C20 acyl group. Preferably, $R_b$ represents a C1-C6 alkyl group, a C6-C10 aryl group, or a C2-C6 acyl group.

$R_c$-$R_f$ each independently represent hydrogen or a C1-C3 alkyl group. Preferably, $R_c$-$R_f$ represent hydrogen or a methyl group.

n represents an integer from 1 to 10, preferably an integer from 1 to 4, and more preferably 2 or 3.

The solvent represented by General formula (1) above used in the present invention is preferably a solvent derived from ethylene glycol (all of $R_c$-$R_f$ are hydrogen) or propylene glycol (any one of $R_c$-$R_f$ is a methyl group.)

Moreover, according to the present invention, the solvent represented by General formula (1) above preferably comprises one or more selected from the group consisting of glycol ether-based solvents, glycol ester-based solvents, and glyme-based solvents.

Specific examples of the aforementioned glycol ether-based solvent preferably include ethylene glycol monomethyl ether, ethylene glycol monoethyl ether, ethylene glycol n-propyl ether, ethylene glycol mono-n-butyl ether, ethylene glycol mono-tert-butyl ether, ethylene glycol monohexyl ether, ethylene glycol monophenyl ether, diethylene glycol monomethyl ether, diethylene glycol monoethyl ether, diethylene glycol n-propyl ether, diethylene glycol mono-n-butyl ether, diethylene glycol tert-butyl ether, diethylene glycol monohexyl ether, diethylene glycol monophenyl ether, triethylene glycol monomethyl ether, triethylene glycol monoethyl ether, triethylene glycol n-propyl ether, triethylene glycol mono-n-butyl ether (butyl triglycol), triethylene glycol mono-tert-butyl ether, triethylene glycol monohexyl ether, and triethylene glycol monophenyl ether. More preferred examples among them include triethylene glycol mono-n-butyl ether (butyl triglycol). It is also possible to use two or more kinds of them in combination.

Specific examples of the aforementioned glycol ester-based solvent include ethylene glycol monomethyl ether acetate, ethylene glycol monoethyl ether acetate, ethylene glycol monobutyl ether acetate (butyl cellosolve acetate), diethylene glycol monoethyl ether acetate (ethyl carbitol acetate), diethylene glycol monobutyl ether acetate, propylene glycol monomethyl ether acetate, and propylene glycol monomethyl ether propionate. More preferred examples among them include ethylene glycol monobutyl ether acetate (butyl cellosolve acetate) and diethylene glycol monoethyl ether acetate (ethyl carbitol acetate). It is also possible to use two or more kinds of them in combination.

Specific examples of the aforementioned glyme-based solvents include monoglyme, diglyme, triglyme, tetraglyme, ethylglyme, methyl ethyl diglyme, butyl diglyme, and dipropylene glycol dimethyl ether. More preferred examples among them include tetraglyme. It is also possible to use two or more kinds of them in combination.

Glymes are one type of solvents classified as glycol ethers, and are characterized by an ether bond of an alkyl group to a diol (which has two OH groups). For example, a triglyme has a structure in which two hydroxy groups of triethylene glycol are methylated, and is represented by the following structural formula.

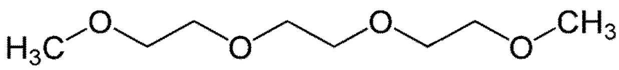

The solvent represented by General formula (1) above used in the present invention preferably has a boiling point of 140°C or higher, more preferably 140-300°C.

[Resin composition of second embodiment]

A resin composition of a second embodiment of the present invention is a resin composition comprising a polycarbonate resin containing a structural unit (b) represented by General formula (A-1) below and a hydroxy compound, wherein the hydroxy compound is represented by General formula (1a) or General formula (1b) above.

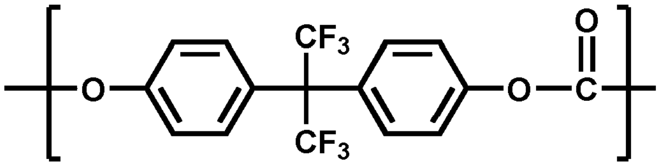

(A-1)

The present inventors considered that, in order to dissolve a polymer in a solvent to obtain a more concentrated polycarbonate resin solution, the polymer used should have a structure in which the interaction between polymer chains is small and which has a moiety that interacts with the solvent, and they considered that the presence of F (fluorine) atoms in the polymer chain increases the distance between polymer chains due to electron repulsion and therefore focused on the following bisphenol AF-based polycarbonate resin shown below.

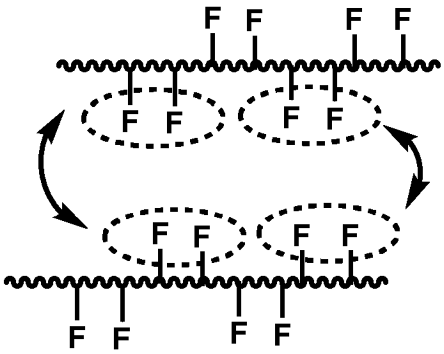

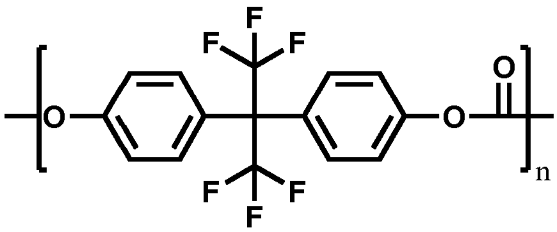

Next, as a requirement for the solvent to be used, the present inventors considered that the solvent should have a structure with a moiety that interacts with the polymer. As shown below, the presence of a hydroxyl group (OH) in the solvent allows hydrogen bond with the F (fluorine) atom in the polymer, which enhances the affinity between the polymer and the solvent.

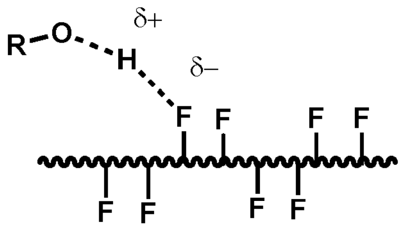

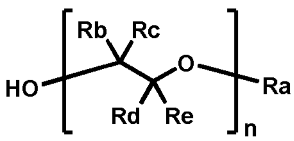

(1a)

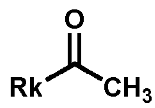

(1b)

On the other hand, as shown below, intramolecular hydrogen bond does not work with isopropyl alcohol or ethanol, and interaction due to hydrogen bonds between solvent molecules is large. In other words, the solubility of a polycarbonate resin was considered to be poor due to the strong bonding between the solvent molecules.

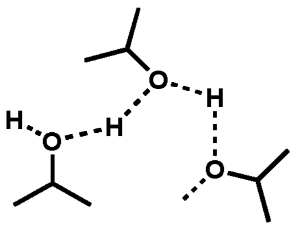

(e.g., isopropyl alcohol)

Consequently, the present inventors concluded that a solvent, such as ether oxygen, which forms intramolecular hydrogen bonds due to the effect of neighboring functional groups and thus has small interactions between solvent molecules as shown below is preferred. This is thought to improve the compatibility with a polycarbonate resin.

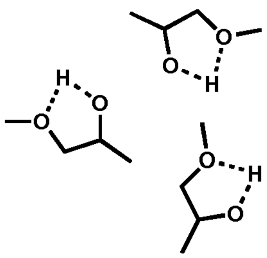

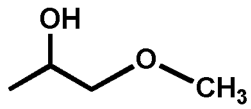

1-Methoxy-2-propanol (also known as propylene glycol monomethyl ether)

The polycarbonate resin used in the resin composition of the second embodiment of the present invention preferably further comprises a structural unit (a) represented by General formula (A) below (except for the structural unit (b) represented by General formula (A-1) above.)

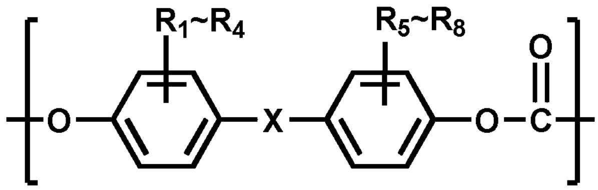

(A)

Here, the structural unit (a) represented by General formula (A) above is synonymous with that described for the resin composition of the first embodiment of the present invention.

In the second embodiment of the present invention, the structural unit (a) represented by General formula (A) above includes one or more selected from the group consisting of structural units represented by Formulae (E)-(G) below.

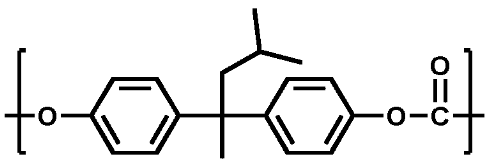

(E)

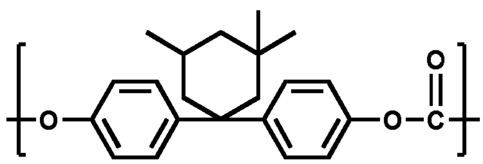

(F)

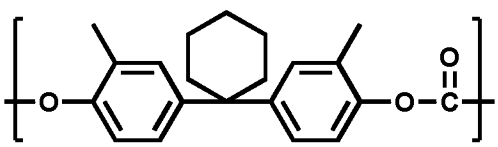

(G)

In the resin composition of the second embodiment of the present invention, the content ratio of the structural unit (b) to the structural unit (a) [(b)/(a)] is preferably 50/50 to 100/0, and more preferably 60/40 to 100/0 in mole ratio.

The polycarbonate resin used in the resin composition of the second embodiment of the present invention preferably retains solvent solubility, coating property, peelability, scratch resistance, impact resistance, and the like that are required as a coating film-forming resin in a good balance. By setting the lower limit of the intrinsic viscosity of the resin equal to or higher than a predetermined value, scratch resistance and anti-impact strength can be enhanced, and by setting the upper limit of the intrinsic viscosity equal to or lower than a predetermined value, the decrease in solvent solubility and the increase in solution viscosity can be suppressed, thereby maintaining the coating property. The intrinsic viscosity ($\eta$) of the polycarbonate resin is preferably in the range of 0.3-2.0 dl/g, and still more preferably in the range of 0.35-1.5 dl/g. Meanwhile, the viscosity-average molecular weight (Mv) of the polycarbonate resin is preferably in the range of 10,000-80,000, and still more preferably in the range of 15,000-50,000. The intrinsic viscosity ($\eta$) and viscosity-average molecular weight (Mv) of the polycarbonate resin can be measured by the methods described in the example below.

In the resin composition of the second embodiment of the present invention, the mass ratio of the polycarbonate resin to the hydroxy compound (polycarbonate resin/hydroxy compound) is preferably 1/99 to 50/50, more preferably 5/95 to 50/50, still more preferably 5/95 to 30/70, and particularly preferably 7/93 to 13/87. If the mass ratio of the polycarbonate resin exceeds 50% by mass, the viscosity may become too high, while if it is less than 1% by mass, it may be too thin for practical use.

<Hydroxy compound>

The resin composition of the second embodiment of the present invention is a solution of the above-mentioned polycarbonate resin dissolved in a hydroxy compound represented by General formula (1a) or General formula (1b) below (organic solvent). In this state, the solution is a paint generally called a clear color. The resin composition of the second embodiment of the present invention can also be made into a colored paint composition by further dissolving or dispersing a desired dye and/or pigment.

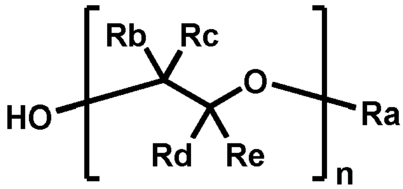
(1a)

In General formula (1a),

$R_a$ represents an optionally substituted C1-C20 alkyl group, C6-C20 aryl group, C2-C20 alkenyl group, C7-C20 aralkyl group or C2-C20 acyl group. Preferably, $R_a$ represents a C1-C6 alkyl group, a C6-C10 aryl group, or a C2-C6 acyl group.

$R_b$-$R_e$ each independently represent hydrogen or a C1-C10 alkyl group. Preferably, $R_b$-$R_e$ represent hydrogen or a C1-C3 alkyl group, and more preferably hydrogen or a methyl group.

n represents an integer from 1 to 10, preferably an integer from 1 to 4, and more preferably 2 or 3.

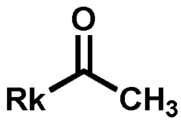
(1b)

In General formula (1b), $R_k$ represents an optionally branched C3-C20 alkyl group with a hydroxyl group, and preferably an optionally branched C3-C10 alkyl group with a hydroxyl group.

Specific examples of the hydroxy compound used in the second embodiment of the present invention include, but are not limited to, butyl carbitol, ethyl carbitol, butyl cellosolve, 1-methoxy-2-propanol (also known as propylene glycol monomethyl ether), 1-ethoxy-2-propanol, 1-butoxy-2-propanol, 1-methoxy-2-butanol, 2-hydroxyethyl methacrylate (also known as methacrylic acid (2-hydroxyethyl)), and diacetone alcohol. One of these compounds can be used alone or two or more of them may be used in combination.

Examples of more preferred hydroxy compound among them include ethyl carbitol, butyl cellosolve, 1-methoxy-2-propanol (also known as propylene glycol monomethyl ether), 2-hydroxyethyl methacrylate (also known as methacrylic acid (2-hydroxyethyl)), and diacetone alcohol, and examples of still more preferred hydroxy compound include ethyl carbitol, 1-methoxy-2-propanol (also known as propylene glycol monomethyl ether), 2-hydroxyethyl methacrylate (also known as methacrylic acid (2-hydroxyethyl)), and diacetone alcohol.

Structural formulae of representative hydroxy compounds that can favorably, but not exclusively, be used in the present invention are shown below.

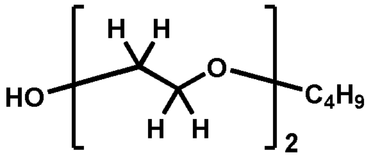

Butyl carbitol

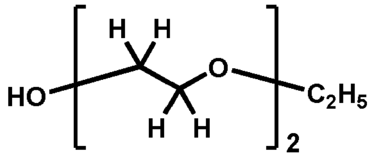

Ethyl carbitol

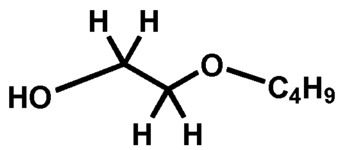

Butyl cellosolve

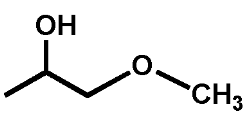

1-Methoxy-2-propanol

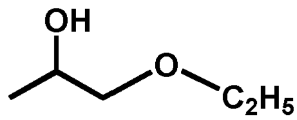

1-Ethoxy-2-propanol

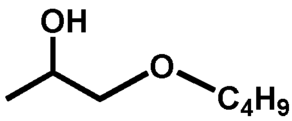

1-Butoxy-2-propanol

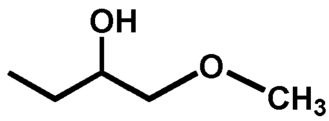

1-Methoxy-2-butanol

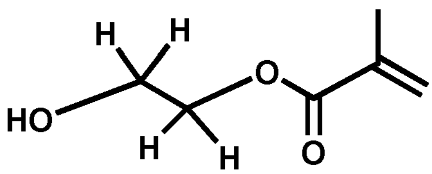

2-Hydroxyethyl methacrylate

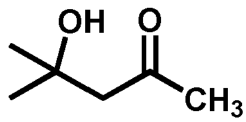

Diacetone alcohol

The hydroxy compound used in the second embodiment of the present invention preferably has a boiling point of 50°C or higher, more preferably 50-250°C.

<Optional additives>

If the resin composition of the first or second embodiment of the present invention is to be used by way of application, a pigment, a dye, colored particles, or light-interfering particles can be added to enhance the color effect. Examples of the pigment and dye include organic pigments such as azo pigments and phthalocyanine pigments, specifically, Red No. 104, Red No. 106, Red No. 201, Red No. 202, Red No. 204, Red No. 215, Red No. 220, Orange No. 203, Orange No. 204, Blue No. 1, Blue No. 404, Yellow No. 205, Yellow No. 401, and Yellow No. 405. In addition, mica titanium, titanium oxide, iron oxide, tin oxide, zirconium oxide, chromium oxide, bismuth oxychloride, silica, chromium, titanium nitride, titanium, magnesium fluoride, gold, silver, nickel, or the like can be used to produce white color, pearl color, metallic color, or lamé appearance. Particles with light interference properties are particles that enhance color effects by reflecting and scattering light, and examples thereof include glass beads, microscopic shells, and mica. These should be added as desired in the range of 0.0001-10.0% by mass in the resin composition.

If necessary, an anti-rust agent, antioxidant, dispersant, UV absorber, defoaming agent, or leveling agent may further be added.

While the viscosity of the resin composition of the first embodiment of the present invention can be set freely according to the desired application, it is preferably in the range of 20-200,000 mPa·s, and more preferably in the range of 50-20,000 mPa·s. While the viscosity of the resin composition of the second embodiment of the present invention can be set freely according to the desired application, it is preferably in the range of 5-200,000 mPa·s, more preferably in the range of 10-20,000 mPa·s, still more preferably in the range of 10-5,000 mPa·s, yet still more preferably in the range of 10-1,000 mPa·s, and particularly preferably in the range of 10-100 mPa·s. The viscosity can be measured, for example, at a measurement temperature of 25°C using a vibro viscometer (CJV5000) manufactured by A&D Company, Limited.

The thickness of the coating film after the application and drying of the resin composition of the first or second

embodiment of the present invention is preferably in the range of 1-200 μm, more preferably in the range of 5-120 μm, and particularly preferably in the range of 10-60 μm. A coating film thickness of 1 μm or more ensures the surface protection strength as a coating film, and a coating film thickness of 200 μm or less is preferred to suppress peeling caused by shrinkage of the coating film.

Other embodiments of the present invention are a printing ink, resin solution for 3D printers, electroconductive paste, and coating solution, all of which contain the aforementioned resin composition of the first or second embodiment of the present invention. Yet another embodiment of the present invention is a film formed of the aforementioned resin composition of the first or second embodiment of the present invention. The resin composition of the first embodiment of the present invention is particularly suitable for the above-mentioned applications because of its low toxicity, excellent stability (no penetration) and uniformity on a base material when applied.

EXAMPLES

(Synthesis example 1 (reference example))

In 1100 ml of a 5 w/w% aqueous sodium hydroxide solution, 102.4 g (0.4 mol) of 2,2-bis(4-hydroxy-3-methylphenyl)propane (hereinafter abbreviated as "BPC": manufactured by Honshu Chemical Industry Co., Ltd.) and 0.1 g of hydrosulfite were dissolved.

To this, 500 ml of methylene chloride was added and, while keep stirring, 0.5 g of benzyltriethylammonium chloride (hereinafter abbreviated as "TEBAC") was added. Then, while keeping the temperature at 15°C, 60 g of phosgene was blown therein over 60 minutes.

After the phosgene blowing, 1.5 g of p-t-butylphenol (hereinafter abbreviated as "PTBP": manufactured by Dainippon Ink and Chemicals, Incorporated) was added as a molecular weight regulator and the mixture was thoroughly stirred to emulsify the reaction solution. After the emulsification, 0.4 ml of triethylamine was added, and the mixture was stirred at 20-25°C for about 1 hour to allow polymerization.

After the polymerization, the reaction solution was separated into an aqueous phase and an organic phase, the organic phase was neutralized with phosphoric acid, and repeatedly rinsed with water until the conductivity of the former liquid (aqueous phase) became 10 μS/cm or less. The resulting polymer solution was dropped into warm water kept at 45°C to remove the solvent by evaporation to obtain white powdery precipitate. The resulting precipitate was filtered and dried at 105°C for 24 hours to obtain polymer powder.

A solution of this polymer in methylene chloride as a solvent at a concentration of 0.5 g/dl had an intrinsic viscosity of 0.65 dl/g at 20°C. The obtained polymer was analyzed by infrared absorption spectroscopy, and absorption due to a carbonyl group at around 1,770 $cm^{-1}$ and absorption due to an ether bond at around 1,240 $cm^{-1}$ were observed, confirming that it was a polycarbonate resin with a carbonate bond (hereinafter, referred to as "PC-1".)

(Synthesis example 2)

Polymerization was carried out in the same manner as in Example 1 except that 54 g of 2,2-bis(4-hydroxyphenyl)-4-methylpentane (hereinafter abbreviated as "MIBK": manufactured by Honshu Chemical Industry Co., Ltd.) and 58 g of 1,1-bis(4-hydroxyphenyl)-1-phenylethane (hereinafter abbreviated as "BPAP": manufactured by Honshu Chemical Industry Co., Ltd.) were used instead of BPC, the amount of PTBP was changed to 2.0 g, and TEBAC was not used, thereby obtaining a polycarbonate resin with an intrinsic viscosity of 0.49 dl/g (hereinafter abbreviated as "PC-2".)

(Synthesis example 3 (reference example))

Polymerization was carried out in the same manner as in Example 1 except that the amounts of BPC and PTBP were changed to 60.4 g and 1.8 g, respectively, 40.1 g of 2,2-bis(4-hydroxyphenyl)propane (hereinafter abbreviated as "BPA": manufactured by Mitsubishi Chemical Corporation) was used at the same time, and TEBAC was not used, thereby obtaining a polycarbonate resin with an intrinsic viscosity of 0.58 dl/g (hereinafter abbreviated as "PC-3".)

(Synthesis example 4)

Polymerization was carried out in the same manner as in Example 1 except that 108 g of MIBK was used instead of BPC, 4.3 g of 2-[2-hydroxy-5-[2-(methacryloyloxy)ethyl]phenyl]-2H-benzotriazole (hereinafter abbreviated as "BTAZ": manufactured by Otsuka Chemical Co. Ltd.) was used instead of PTBP, and TEBAC was not used, thereby obtaining a polycarbonate resin with an intrinsic viscosity of 0.54 dl/g (hereinafter abbreviated as "PC-4".)

(Synthesis example 5 (reference example))

Polymerization was carried out in the same manner as in Example 1 except that the amount of BPC was changed to 60.4 g, 40.1 g of BPA and 1.92 g of p-hydroxyphenethyl alcohol (hereinafter abbreviated as "PHEP": manufactured by Otsuka Chemical Co. Ltd.) were used at the same time, and PTBP was not used, thereby obtaining a polycarbonate resin with an intrinsic viscosity of 0.72 dl/g (hereinafter abbreviated as "PC-5".)

(Synthesis example 6 (reference example))

Polymerization was carried out in the same manner as in Example 1 except that 107.2 g of BPZ was used instead of BPC, the amount of PTBP was changed to 2.0 g, and TEBAC was not used, thereby obtaining a polycarbonate resin with an intrinsic viscosity of 0.44 dl/g (hereinafter abbreviated as "PC-6".)

(Synthesis example 7 (reference example))

Polymerization was carried out in the same manner as in Example 1 except that 116.0 g of BPAP was used instead of BPC, the amount of PTBP was changed to 2.0 g, and TEBAC was not used, thereby obtaining a polycarbonate resin with an intrinsic viscosity of 0.43 dl/g (hereinafter abbreviated as "PC-7".)

(Synthesis example 8)

Polymerization was carried out in the same manner as in Example 1 except that 124.0 g of 3,3,5-trimethyl-1,1-bis(4-hydroxyphenyl)cyclohexane (hereinafter abbreviated as "TMC": manufactured by Sanko Co., Ltd.) was used instead of BPC, the amount of PTBP was changed to 1.62 g, and TEBAC was not used, thereby obtaining a polycarbonate resin with an intrinsic viscosity of 0.48 dl/g (hereinafter abbreviated as "PC-8".)

(Synthesis example 9 (reference example))

Polymerization was carried out in the same manner as in Example 1 except that 91.2 g of BPA was used instead of BPC, the amount of PTBP was changed to 2.0 g, and TEBAC was not used, thereby obtaining a polycarbonate resin with an intrinsic viscosity of 0.49 dl/g (hereinafter abbreviated as "PC-9".)

[Examples 1 through 13 and Comparative examples 1 through 3] (Examples 1, 3, 4, 6 and 8-11 are comparative examples)

5 g of each polycarbonate (PC) resin obtained in Synthesis examples 1 through 9 described above and 45 g of solvent were placed in a mayonnaise bottle in the combination shown in Table 1 below and stirred in a shaker to produce a resin composition.

The resin compositions of Examples 1 through 13 and Comparative examples 1 through 3 obtained in this way were subjected to the following tests and physical property measurements. The results are shown in Table 1 below.

<Solvent solubility test>

When preparing the resin composition, that is, when 5 g of polycarbonate resin and 45 g of solvent listed in Table 1 below were placed in a mayonnaise bottle and stirred in a shaker, the time that took from the start of stirring until the resin was visually completely dissolved (dissolving time) was measured.

Dissolving time was less than 3 hours: "A"
Dissolving time was 3 hours or more but less than 48 hours: "B"
Dissolving time was 48 hours or more: "C"
Did not dissolve: "D"

<Viscosity of resin composition>

The viscosity of the resin composition was measured at 25°C using a vibro viscometer (CJV5000) manufactured by A&D Company, Limited.

<Evaluation of PC coating film>

(Production of coating film)

A PC sheet (NF-2000 manufactured by Mitsubishi Engineering-Plastics Corporation) was acquired, and the resin composition prepared above was applied to this PC sheet using a 60 μm-thick gap coater. After the application, drying was performed in a box-type hot-air dryer at 120°C for 1 minute to form a coating film.

(Smoothness upon formation of coating film)

Evaluation was carried out as follows.

Coating film was formed uniformly without a catch between the coater and the PC sheet upon forming the coating film: "○"
Coating film was not uniform with a catch between the coater and the PC sheet upon forming the coating film: "×"
(Bleed into PC base material)

After application of the resin composition, drying was performed in a box-type hot-air dryer at 120°C for 1 minute to visually evaluate the resulting coating film.

No bleed at the interface between the PC sheet and the coating film: "○"
Slight bleed: "A"
Bleed was large and interface was rough: "×"

<PC base material penetration test>

PC sheet (NF-2000 manufactured by Mitsubishi Engineering-Plastics Corporation) was cut into a 1 cm x 1 cm square piece and placed in a 9 cc vial, to which the resin composition prepared above was further added so that the PC piece was completely immersed into it. The PC piece was left in place to visually inspect its state after 24 hours.

Retained its original shape: "A"
Swelling of PC piece was observed: "B"
PC piece lost its shape and was partially dissolved in the solution: "C"

<Measurements of intrinsic viscosity (η) and viscosity-average molecular weight (Mv) of polycarbonate resin>

The viscosity of a 0.5 grams/deciliter methylene chloride solution of the polycarbonate resin obtained in each of Synthesis examples 1 through 9 was measured at 20°C with a Ubbelohde capillary viscometer to calculate the intrinsic viscosity [η] (deciliter/gram) of said polycarbonate resin by Formula (I) below using Huggins' constant of 0.45.

$$\eta = 1.23 \times 10^{-4} \times Mv^{0.83} \qquad (I)$$

[Table 1]

| | Composition of resin composition | | | | | | Properties of resin composition | | | Evaluation of PC coating film | | PC base material |
|---|---|---|---|---|---|---|---|---|---|---|---|---|
| | Type of PC | PC (monomer/terminator) | | Mv of PC (ten thousand) | Solvent | Concentration of PC (wt%) | Dissolving time (hour) | Solubility in solvent | Viscosity (mPa·s) | Smoothness upon formation of coating film | Bleed into PC base material | Substrate penetration test |
| Example 1* | PC-1 | BPC | PTBP | 3.3 | BCsA | 10 | 1.5 | A | 130 | ○ | ○ | A |
| Example 2 | PC-2 | MIBK/BPAP | PTBP | 2.3 | BCsA | 10 | 1.5 | A | 60 | ○ | ○ | A |
| Example 3* | PC-3 | BPA/BPC | PTBP | 2.7 | ECA | 10 | 3.5 | B | 164 | ○ | ○ | A |
| Example 4* | PC-1 | BPC | PTBP | 3.3 | PGMEA | 10 | 1.5 | A | 99 | ○ | ○ | A |
| Example 5 | PC-2 | MIBK/BPAP | PTBP | 2.3 | PGMEA | 10 | 1.5 | A | 59 | ○ | ○ | A |
| Example 6* | PC-3 | BPA/BPC | PTBP | 2.7 | PGMEA | 10 | 1.0 | A | 73 | ○ | ○ | A |
| Example 7 | PC-4 | MIBK | BTAZ | 2.7 | BCsA | 10 | 1.5 | A | 53 | ○ | ○ | A |
| Example 8* | PC-5 | BPA/BPC | PHEP | 2.7 | PGMEA | 10 | 1.5 | A | 66 | ○ | ○ | A |
| Example 9* | PC-6 | BPZ | PTBP | 2.1 | ECA | 10 | 5.0 | B | 110 | ○ | ○ | A |
| Example 10* | PC-6 | BPZ | PTBP | 2.1 | TGM | 10 | 3.0 | B | 122 | ○ | ○ | A |
| Example 11* | PC-7 | BPAP | PTBP | 2.0 | PGMEA | 10 | 4.0 | B | 62 | ○ | ○ | A |
| Example 12 | PC-8 | TMC | PTBP | 2.2 | PGMEA | 10 | 6.0 | B | 52 | ○ | ○ | A |
| Example 13 | PC-2 | MIBK/BPAP | PTBP | 2.3 | BTG | 10 | >48 | C | 180 | ○ | Δ | A |
| Comparative example 1 | PC-9 | BPA | PTBP | 2.3 | ECA | 10 | Not dis-solved | D | Not dis-solved | Not evaluated because it did not dissolve | | |
| Comparative example 2 | PC-6 | BPZ | PTBP | 2.1 | DMAc | 10 | 1.5 | A | 11 | × | × | C |
| Comparative example 3 | PC-6 | BPZ | PTBP | 2.1 | Isophorone | 10 | >48 | C | 80 | ○ | Δ | C |

* Comparative Example
ECA: Ethyl carbitol acetate; BCsA: Butyl cellosolve acetate
TGM: Tetraglyme
BTG: Butyl triglycol
PGMEA: Propylene glycol monomethyl ether acetate
DMAc: N,N-Dimethylacetamide (non-glycol-based solvent)

| | | |
|---|---|---|
| BPC | TMC | PTBP |
| 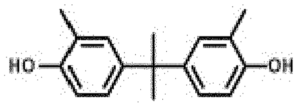 | 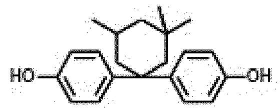 | 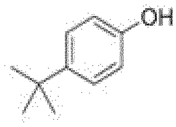 |
| MIBK | **BPZ** | BTAZ |
| 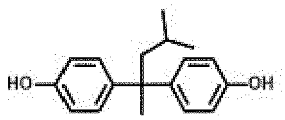 | 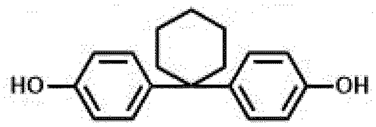 | 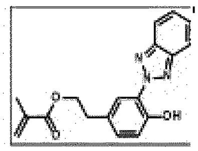 |
| BPAP | BPA | PHEP |
| 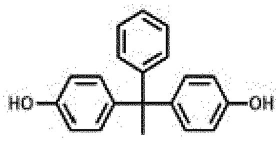 | 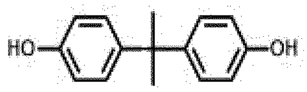 | 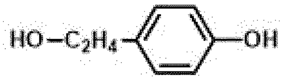 |
| ECA | BCsA, | TGM |
| 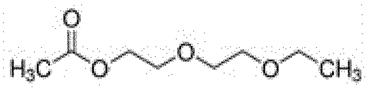 | 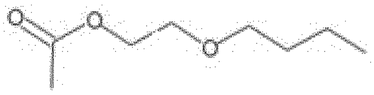 | 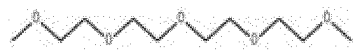 |
| BTG | PGMEA | DMAc |
| 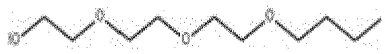 | 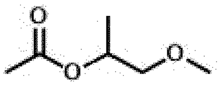 | 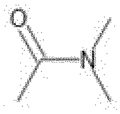 |
| Isophorone | | |
| 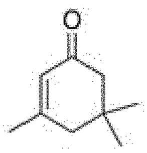 | | |

Although N,N-dimethylacetamide (non-glycol-based solvent) used in Comparative example 2 showed good solubility of the polycarbonate resin, the viscosity of the solution was remarkably low, smoothness during the formation of the coating film was poor, and there were many bleeds after the film formation. In addition, the resin composition of Comparative example 2 resulted in biting into the PC base material. Isophorone (non-glycol-based solvent) used in Comparative example 3 took longer to dissolve the polycarbonate resin, and the resin composition thereof resulted in biting into the PC base material.

(Synthesis example 10 (reference example))

In 750 ml of a 6.3 w/w% aqueous sodium hydroxide solution, 90.0 g (0.34 mol) of 2,2-bis(4-hydroxyphenyl)-1,1,1,3,3,3-hexafluoropropane (hereinafter abbreviated as "BPAF": manufactured by Central Glass Co., Ltd.) and 0.5 g of hydrosulfite were dissolved.

To this, 300 ml of methylene chloride was added and, while keep stirring, 0.1 g of benzyltriethylammonium chloride (hereinafter abbreviated as "TEBAC") was added. Then, while keeping the temperature at 15-25°C, 42.4 g of phosgene was blown therein over 30 minutes.

After the phosgene blowing, 1.34 g of p-t-butylphenol (hereinafter abbreviated as "PTBP": manufactured by Dainippon Ink and Chemicals, Incorporated) was added as a molecular weight regulator and the mixture was thoroughly stirred to emulsify the reaction solution. After the emulsification, 0.5 ml of triethylamine was added, and the mixture was stirred at 20-30°C for about 1 hour to allow polymerization.

After the polymerization, the reaction solution was separated into an aqueous phase and an organic phase, the organic phase was neutralized with phosphoric acid, and repeatedly rinsed with water until the conductivity of the former liquid (aqueous phase) became 10 μS/cm or less. The resulting polymer solution was transferred onto an aluminum plate to remove the solvent by evaporation on a hot plate, and the resulting solid was further dried at 120°C for 24 hours to obtain a polymer solid.

A solution of this polymer in methylene chloride as a solvent at a concentration of 0.5 g/dl had an intrinsic viscosity of 0.33 dl/g at 20°C and a viscosity-average molecular weight (Mv) of 15,300. The obtained polymer was analyzed by infrared absorption spectroscopy, and absorption due to a carbonyl group at around 1,770 $cm^{-1}$ and absorption due to an ether bond at around 1,240 $cm^{-1}$ were observed, confirming that it was a polycarbonate resin with a carbonate bond (hereinafter abbreviated as "PC-10".)

(Synthesis example 11 (reference example))

Polymerization was carried out in the same manner as in Synthesis example 10 except that the amount of BPAF was changed to 63.0 g, 18.0 g of 1,1-bis(4-hydroxyphenyl)propane (hereinafter abbreviated as "BPA": manufactured by Mitsubishi Chemical Corporation) was used at the same time, and PTBP was replaced by 0.92 g of p-hydroxyphenethyl alcohol (hereinafter abbreviated as "PHEP": manufactured by Otsuka Chemical Co. Ltd.), thereby obtaining a polycarbonate resin (Mv: 27,000, hereinafter abbreviated as "PC-11".)

(Synthesis example 12 (reference example))

Polymerization was carried out in the same manner as in Synthesis example 10 except that the amount of BPAF was changed to 54.0 g, and 28.7 g of 1,1-bis(4-hydroxyphenyl)cyclohexane (hereinafter abbreviated as "BPZ": manufactured by Taoka Chemical Co., Ltd.) was used at the same time, thereby obtaining a polycarbonate resin (Mv: 17,600, hereinafter abbreviated as "PC-12".)

(Synthesis example 13 (reference example))

Polymerization was carried out in the same manner as in Synthesis example 10 except that the amount of BPAF was changed to 54.0 g, and 31.1 g of 1,1-bis(4-hydroxyphenyl)-1-phenylethane (hereinafter abbreviated as "BPAP": manufactured by Honshu Chemical Industry Co., Ltd.) was used at the same time, thereby obtaining a polycarbonate resin (Mv: 19,400, hereinafter abbreviated as "PC-13".)

(Synthesis example 14)

Polymerization was carried out in the same manner as in Synthesis example 10 except that the amount of BPAF was changed to 54.0 g, and 40.1 g of 1,1-bis(4-hydroxyphenyl)-3,3,5-trimethylcyclohexane (hereinafter abbreviated as "TMC": manufactured by Honshu Chemical Industry Co., Ltd.) was used at the same time, thereby obtaining a polycarbonate resin (Mv: 17,300, hereinafter abbreviated as "PC-14".)

(Synthesis example 15 (reference example))

Polymerization was carried out in the same manner as in Synthesis example 10 except that the amount of BPAF was changed to 45.0 g, and 34.3 g of 2,2-bis(4-hydroxy-3-methylphenyl)propane (hereinafter abbreviated as "BPC": manufactured by Honshu Chemical Industry Co., Ltd.) was used at the same time, thereby obtaining a polycarbonate resin (Mv: 17,300, hereinafter abbreviated as "PC-15".)

(Synthesis example 16 (reference example))

Polymerization was carried out in the same manner as in Synthesis example 10 except that the amount of BPAF was changed to 63.0 g, and 30.4 g of 9,9-bis(4-hydroxy-3-methylphenyl)fluorene (hereinafter abbreviated as "BCFL": manufactured by Honshu Chemical Industry Co., Ltd.) was used at the same time, thereby obtaining a polycarbonate resin (Mv: 15,800, hereinafter abbreviated as "PC-16".)

(Synthesis example 17 (reference example))

Polymerization was carried out in the same manner as in Example 10 except that 91.2 g of BPA was used, the amount of PTBP was changed to 2.00 g, and TEBAC was not used, thereby obtaining a polycarbonate resin (Mv: 21,000,

hereinafter abbreviated as "PC-17".)

For each of Synthetic examples 10 through 17 described above, the weights of the raw material monomers and terminator, copolymer ratio (mol%), and viscosity-average molecular weight (Mv) of the resulting polycarbonate resin are shown in Table 2.

[Table 2]

| Type of PC | Monomer (1) | Weight (1) (g) | Monomer (2) | Weight (2) (g) | Copolymer ratio (mol) | Terminator | Weight (g) | Mv of PC (ten thousand) |
|---|---|---|---|---|---|---|---|---|
| PC-10 | BPAF | 90.0 | - | - | - | PTBP | 1.34 | 1.5 |
| PC-11 | BPAF | 63.0 | BPA | 18.0 | 70/30 | PREP | 0.92 | 2.7 |
| PC-12 | BPAF | 54.0 | BPZ | 28.7 | 60/40 | PTBP | 1.34 | 1.8 |
| PC-13 | BPAF | 54.0 | BPAP | 31.1 | 60/40 | PTBP | 1.34 | 1.9 |
| PC-14 | BPAF | 54.0 | TMC | 40.1 | 60/40 | PTBP | 1.34 | 1.7 |
| PC-15 | BPAF | 45.0 | BPC | 34.3 | *50/50* | PTBP | 1.34 | 1.7 |
| PC-16 | BPAF | 63.0 | BCFL | 30.4 | 70/30 | PTBP | 1.34 | 1.6 |
| PC-17 | BPA | 91.2 | - | - | - | PTBP | 2.00 | 2.1 |

[Examples 14-1 through 20-4 and Comparative examples 4-1 through 11-5] (Examples 14-1 through 17-4 and 19-1 through 20-4 are comparative examples)

4.0 g of PC-10 obtained in Synthesis example 10 as a polycarbonate resin and 36.0 g of ethyl carbitol as a hydroxy compound were placed in a mayonnaise bottle and stirred in a shaker for 24 hours to obtain a resin solution.

Resin solutions of other examples and comparative examples were obtained in the same manner as in Example 14-1, using the polycarbonate resins and hydroxy compounds shown in Table 3.

The thus-obtained resin solutions of Examples 14-1 through 20-4 and Comparative examples 4-1 through 11-5 were subjected to the solubility test described below. The results are shown in Table 3. The viscosities and transmittances of the resin solutions obtained in Examples 14-2, 15-2, 16-2, 17-2, 18-2, 19-2, and 20-2 measured by the following methods are shown in Table 3. Similarly, the present inventors attempted to measure the viscosity and transmittance of the resin solution obtained in Comparative example 11-2, but it could not be evaluated as a resin solution due to the presence of undissolved resin.

<Measurements of intrinsic viscosity (η) and viscosity-average molecular weight (Mv) of polycarbonate resin>

The viscosity of a 0.5 grams/deciliter methylene chloride solution of each of the obtained polycarbonate resin was measured at 20°C with a Ubbelohde capillary viscometer to calculate the intrinsic viscosity [η] (deciliter/gram) of said polycarbonate resin by Formula (I) below using Huggins' constant of 0.45.

$$\eta = 1.23 \times 10^{-4} \times Mv^{0.83} \qquad (I)$$

<Glass transition temperature>

The glass transition temperatures of the resulting polycarbonate resins were determined using a differential scanning calorimeter (DSC).

Measurement instrument: Differential Scanning Calorimeter (DSC) DSC-50 manufactured by Shimadzu Corporation

Heating rate: 10°C/min
Gas flow environment: Nitrogen 20 ml/min
Pretreatment of sample: Heating and melting at 300°C

<Solubility of resin solution>

Appearances of the obtained resin solutions were visually inspected and judged according to the following indices.

Transparent with no undissolved resin: "◦"
A small amount of undissolved resin was present: "△"
Did not dissolve at all: "×"

<Viscosity of resin solution>

The viscosities of the obtained resin solutions were measured using a vibro viscometer.

Measurement instrument: Vibro viscometer CJV5000 manufactured by A&D Company, Limited.
Measurement temperature: 25°C

<Transmittance of resin solution>

The transmittances of the obtained resin solutions were measured using a spectrophotometer.

Measurement instrument: UV-Visible spectrophotometer UV-1280 manufactured by Shimadzu Corporation
Cell: 1 cm quartz cell
Measurement wavelength: 800 nm
Measurement procedure: In photometric mode, zero-point correction at 800 nm was performed with propylene glycol monomethyl ether (PGM) before measuring the transmittance of the resin solution.

**[Table 3]**

| | Type of polycarbonate resin | Polycarbonate resin | | Mv of polycarbonate resin | Tg of polycarbonate resin | Weight of polycarbonate resin | Type of hydroxy compound | Weight of hydroxy compound | Resin composition | | |
|---|---|---|---|---|---|---|---|---|---|---|---|
| | | Copolymer ratio of monomers | Terminator | (ten thousand) | (°C) | (g) | | (g) | Solubility | Viscosity (mPa·s) | Transmittance (%) |
| Example 14-1* | PC-10 | BPAF 100 | PTBP | 1.5 | 161 | 4.0 | Ethyl carbitol | 36.0 | ○ | | |
| Example 14-2* | | | | | | 4.0 | Propylene glycol monomethyl ether | 36.0 | ○ | 11.5 | 91.3 |
| Example 14-3* | | | | | | 4.0 | Diacetone alcohol | 36.0 | ○ | | |
| Example 14-4* | | | | | | 4.0 | Methacrylic acid (2-hydroxyethyl) | 36.0 | ○ | | |
| Example 14-5* | | | | | | 4.0 | Butyl cellosolve | 36.0 | ○ | | |
| Comparative example 4-1 | | | | | | 4.0 | Isopropanol | 36.0 | × | | |
| Comparative example 4-2 | | | | | | 4.0 | Ethanol | 36.0 | × | | |
| Example 15-1* | PC-11 | BPAF/BPA 70/30 | PHEP | 2.7 | 156 | 4.0 | Ethyl carbitol | 36.0 | ○ | | |
| Example 15-2* | | | | | | 4.0 | Propylene glycol monomethyl ether | 36.0 | ○ | 61.0 | 96.0 |
| Example 15-3* | | | | | | 4.0 | Diacetone alcohol | 36.0 | ○ | | |
| Example 15-4* | | | | | | 4.0 | Methacrylic acid (2-hydroxyethyl) | 36.0 | ○ | | |
| Comparative example 5-1 | | | | | | 4.0 | Isopropanol | 36.0 | × | | |
| Comparative example 5-2 | | | | | | 4.0 | Ethanol | 36.0 | × | | |

(continued)

| | Type of polycarbonate resin | Polycarbonate resin | | Mv of polycarbonate resin | Tg of polycarbonate resin | Weight of polycarbonate resin | Type of hydroxy compound | Weight of hydroxy compound | Resin composition | | |
|---|---|---|---|---|---|---|---|---|---|---|---|
| | | Copolymer ratio of monomers | Terminator | (ten thousand) | (°C) | (g) | | (g) | Solubility | Viscosity (mPa·s) | Transmittance (%) |
| Example 16-1* | PC-12 | BPAF/BPZ | PTBP | 1.8 | 166 | 4.0 | Ethyl carbitol | 36.0 | ○ | | |
| Example 16-2* | | 60/40 | | | | 4.0 | Propylene glycol monomethyl ether | 36.0 | ○ | 26.9 | 99.4 |
| Example 16-3* | | | | | | 4.0 | Diacetone alcohol | 36.0 | ○ | | |
| Example 16-4* | | | | | | 4.0 | Methacrylic acid (2-hydroxyethyl) | 36.0 | ○ | | |
| Comparative example 6-1 | | | | | | 4.0 | Isopropanol | 36.0 | × | | |
| Comparative example 6-2 | | | | | | 4.0 | Ethanol | 36.0 | × | | |
| Example 17-1* | PC-13 | BPAF/BPAP | PTBP | 1.9 | 173 | 4.0 | Ethyl carbitol | 36.0 | ○ | | |
| Example 17-2* | | 60/40 | | | | 4.0 | Propylene glycol monomethyl ether | 36.0 | ○ | 30.9 | 99.3 |
| Example 17-3* | | | | | | 4.0 | Diacetone alcohol | 36.0 | ○ | | |
| Example 17-4* | | | | | | 4.0 | Methacrylic acid (2-hydroxyethyl) | 36.0 | ○ | | |
| Comparative example 7-1 | | | | | | 4.0 | Isopropanol | 36.0 | × | | |
| Comparative example 7-2 | | | | | | 4.0 | Ethanol | 36.0 | × | | |

(continued)

| | Type of polycarbonate resin | Polycarbonate resin | | Mv of polycarbonate resin | Tg of polycarbonate resin | Weight of polycarbonate resin | Type of hydroxy compound | Weight of hydroxy compound | Resin composition | | |
|---|---|---|---|---|---|---|---|---|---|---|---|
| | | Copolymer ratio of monomers | Terminator | (ten thousand) | (°C) | (g) | | (g) | Solubility | Viscosity (mPa·s) | Transmittance (%) |
| Example 18-1 | PC-14 | BPAF/TMC 60/40 | PTBP | 1.7 | 190 | 4.0 | Ethyl carbitol | 36.0 | ○ | | |
| Example 18-2 | | | | | | 4.0 | Propylene glycol monomethyl ether | 36.0 | ○ | 30.0 | 98.6 |
| Example 18-3 | | | | | | 4.0 | Diacetone alcohol | 36.0 | ○ | | |
| Example 18-4 | | | | | | 4.0 | Methacrylic acid (2-hydroxyethyl) | 36.0 | ○ | | |
| Comparative example 8-1 | | | | | | 4.0 | Isopropanol | 36.0 | × | | |
| Comparative example 8-2 | | | | | | 4.0 | Ethanol | 36.0 | × | | |

[Table 4] Table 3 (cont.)

| | Type of polycarbonate resin | Polycarbonate resin | | Mv of polycarbonate resin | Tg of polycarbonate resin | Weight of polycarbonate resin | Type of hydroxy compound | Weight of hydroxy compound | Resin composition | | |
|---|---|---|---|---|---|---|---|---|---|---|---|
| | | Copolymer ratio of monomers | Terminator | (ten thousand) | (°C) | (g) | | (g) | Solubility | Viscosity (mPa·s) | Transmittance (%) |
| Example 19-1* | PC-15 | BPAF/BPC 50/50 | PTBP | 1.7 | 139 | 4.0 | Ethyl carbitol | 36.0 | ○ | | |
| Example 19-2* | | | | | | 4.0 | Propylene glycol monomethyl ether | 36.0 | ○ | 32.5 | 98.3 |
| Example 19-3* | | | | | | 4.0 | Diacetone alcohol | 36.0 | ○ | | |
| Example 19-4* | | | | | | 4.0 | Methacrylic acid (2-hydroxyethyl) | 36.0 | ○ | | |
| Comparative example 9-1 | | | | | | 4.0 | Isopropanol | 36.0 | × | | |
| Comparative example 9-2 | | | | | | 4.0 | Ethanol | 36.0 | × | | |
| Example 20-1* | PC-16 | BPAF/BCFL 70/30 | PTBP | 1.6 | 187 | 4.0 | Ethyl carbitol | 36.0 | ○ | | |
| Example 20-2* | | | | | | 4.0 | Propylene glycol monomethyl ether | 36.0 | ○ | 21.5 | 98.1 |
| Example 20-3* | | | | | | 4.0 | Diacetone alcohol | 36.0 | ○ | | |
| Example 20-4* | | | | | | 4.0 | Methacrylic acid (2-hydroxyethyl) | 36.0 | ○ | | |
| Comparative example 10-1 | | | | | | 4.0 | Isopropanol | 36.0 | × | | |
| Comparative example 10-2 | | | | | | 4.0 | Ethanol | 36.0 | × | | |

(continued)

| | Type of polycarbonate resin | Polycarbonate resin | | Mv of polycarbonate resin | Tg of polycarbonate resin | Weight of polycarbonate resin | Type of hydroxy compound | Weight of hydroxy compound | Resin composition | | |
|---|---|---|---|---|---|---|---|---|---|---|---|
| | | Copolymer ratio of monomers | Terminator | (ten thousand) | (°C) | (g) | | (g) | Solubility | Viscosity (mPa·s) | Transmittance (%) |
| Comparative example 11-1 | PC-17 | BPA 100 | PTBP | 2.1 | 145 | 4.0 | Ethyl carbitol | 36.0 | × | | |
| Comparative example 11-2 | | | | | | 4.0 | Propylene glycol monomethyl ether | 36.0 | × | Not measurable | Not measurable |
| Comparative example 11-3 | | | | | | 4.0 | Diacetone alcohol | 36.0 | × | | |
| Comparative example 11-4 | | | | | | 4.0 | Methacrylic acid (2-hydroxyethyl) | 36.0 | × | | |
| Comparative example 11-5 | | | | | | 4.0 | Butyl cellosolve | 36.0 | × | | |
| | | | | | | | | | | | |
| Example 14-6* | PC-10 | BPAF100 | PTBP | 1.5 | 161 | 12.0 | Propylene glycol monomethyl ether | 28.0 | ○ | | |
| Example 14-7* | | | | | | 20.0 | Propylene glycol monomethyl ether | 20.0 | ○ | | |

*Comparative Example

INDUSTRIAL APPLICABILITY

The resin composition of the first embodiment of the present invention is a resin composition obtained by dissolving a specific highly soluble polycarbonate resin in a specific glycol-based solvent, which is suitable as a paint, ink, or electroconductive paste because of its low toxicity, moderate viscosity, and low penetration into the base material. In addition, since the resin composition of the second embodiment of the present invention can provide a more concentrated polycarbonate resin solution, it is suitable for applications requiring a highly concentrated polycarbonate resin solution, such as a paint, ink, and electroconductive paste.

## Claims

1. A resin composition comprising a solvent represented by General formula (1) below and a polycarbonate resin containing a structural unit (a) represented by General formula (A) below (except for a polycarbonate homopolymer composed solely of a structural unit represented by Formula (i) below):

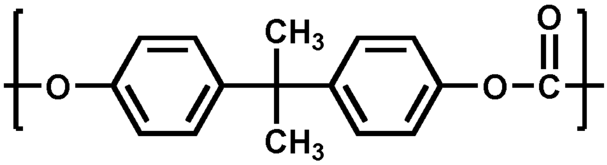

(i)

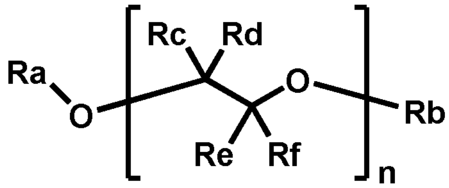

(1)

wherein, $R_a$ represents hydrogen, or an optionally substituted C1-C20 alkyl group, C6-C20 aryl group, C2-C20 alkenyl group, C7-C20 aralkyl group or C2-C20 acyl group,
$R_b$ represents an optionally substituted C1-C20 alkyl group, C6-C20 aryl group, C2-C20 alkenyl group, C7-C20 aralkyl group or C2-C20 acyl group,
$R_c$-$R_f$ each independently represent hydrogen or a C1-C3 alkyl group, and
n represents an integer from 1 to 10);

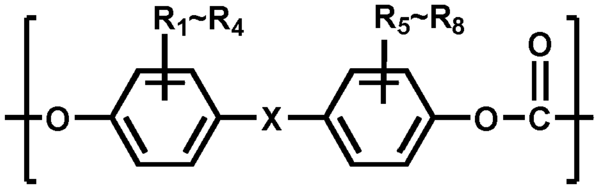

(A)

(wherein, $R_1$-$R_8$ each independently represent hydrogen, fluorine, chlorine, bromine, iodine, or an optionally substituted C1-C7 alkyl group, C6-C12 aryl group, C2-C7 alkenyl group, C1-C7 alkoxy group or C7-C17 aralkyl group, and X represents -O-, -S-, -SO-, $-SO_2-$, -CO-, or a divalent group represented by any of Formulae (2)-(4) below);

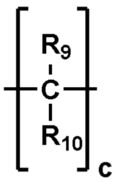
(2)

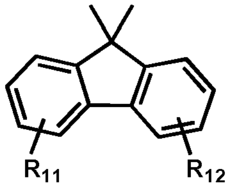
(3)

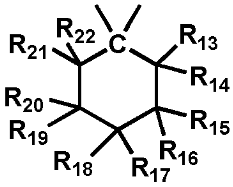
(4)

(in Formulae (2)-(4), $R_9$ and $R_{10}$ each independently represent hydrogen, a halogen, or an optionally substituted C1-C20 alkyl group, C1-C5 alkoxy group, C6-C12 aryl group, C7-C17 aralkyl group or C2-C15 alkenyl group, or $R_9$ and $R_{10}$ bind to each other to form a C3-C20 carbon ring or a C1-C20 heterocyclic ring,
c represents an integer from 0 to 20,
$R_{11}$ and $R_{12}$ each independently represent hydrogen, a halogen, or an optionally substituted C1-C20 alkyl group, C1-C5 alkoxy group, C6-C12 aryl group, C7-C17 aralkyl group or C2-C15 alkenyl group, or
$R_{11}$ and $R_{12}$ bind to each other to form a C3-C20 carbon ring or a C1-C20 heterocyclic ring, and
$R_{13}$-$R_{22}$ each independently represent hydrogen or a C1-C3 alkyl group,
wherein General formula (A) above comprises one or more selected from the group consisting of Formulae (E)-(G) below:

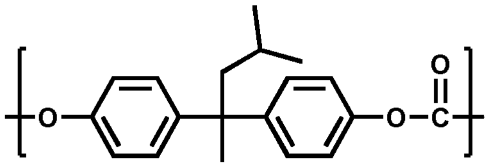
(E)

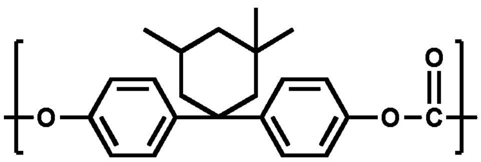
(F)

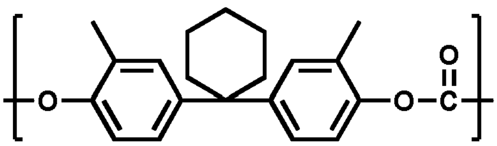
(G).

2. The resin composition according to Claim 1, wherein a mass ratio of the solvent to the polycarbonate resin (solvent/polycarbonate resin) is 99.99/0.01 to 50/50.

3. The resin composition according to Claim 1 or 2, wherein a boiling point of the solvent is 140°C or higher.

4. The resin composition according to any one of Claims 1 to 3, wherein, in General formula (1) above, $R_a$ represents hydrogen, a C1-C6 alkyl group, or a C2-C6 acyl group, $R_b$ represents a C1-C6 alkyl group, a C6-C10 aryl group, or a C2-C6 acyl group, $R_c$-$R_f$ represent hydrogen or a methyl group, and n represents an integer from 1 to 4.

5. The resin composition according to Claim 4, wherein n in General formula (1) above is 2 or 3.

6. The resin composition according to any one of Claims 1 to 3, wherein the solvent represented by General formula (1) above comprises one or more selected from the group consisting of a glycol ether-based solvent, a glycol ester-based solvent, and a glyme-based solvent.

7. A resin composition comprising a polycarbonate resin containing a structural unit (b) represented by General formula (A-1) below and a hydroxy compound, wherein

the hydroxy compound is represented by General formula (1a) or General formula (1b) below:

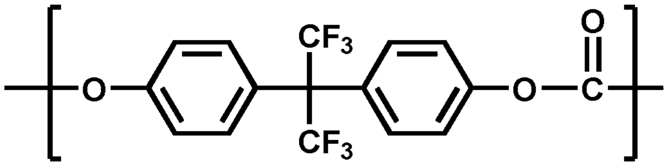

(A-1)

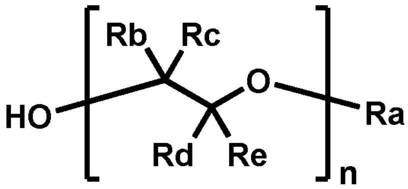

(1a)

in Formula (1a), $R_a$ represents an optionally substituted C1-C20 alkyl group, C6-C20 aryl group, C2-C20 alkenyl group, C7-C20 aralkyl group or C2-C20 acyl group,
$R_b$-$R_e$ each independently represent hydrogen or a C1-C10 alkyl group, and
n represents an integer from 1 to 10;

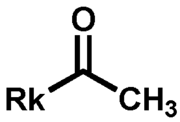

(1b)

in Formula (1b), $R_k$ represents an optionally branched C3-C20 alkyl group having a hydroxyl group,
wherein the polycarbonate resin further comprises a structural unit (a) represented by General formula (A) below (except for the structural unit (b) represented by General formula (A-1) above):

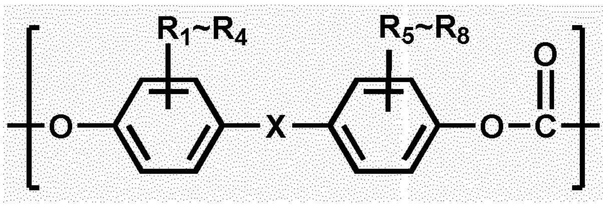

(A)

(in Formula (A), $R_1$-$R_8$ each independently represent hydrogen, fluorine, chlorine, bromine, iodine, or an optionally substituted C1-C7 alkyl group, C6-C12 aryl group, C2-C7 alkenyl group, C1-C7 alkoxy group or C7-C17 aralkyl group, and X represents -O-, -S-, -SO-, $-SO_2-$, -CO-, or a divalent group represented by any of Formulae (2)-(4) below);

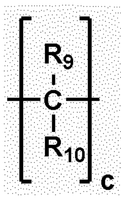

(2)

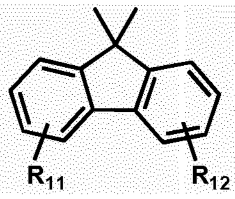

(3)

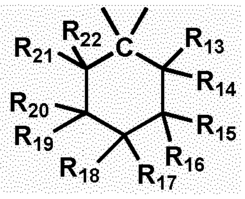

(4)

(in Formulae (2)-(4), $R_9$ and $R_{10}$ each independently represent hydrogen, a halogen, or an optionally substituted C1-C20 alkyl group, C1-C5 alkoxy group, C6-C12 aryl group, C7-C17 aralkyl group or C2-C15 alkenyl group, or $R_9$ and $R_{10}$ bind to each other to form a C3-C20 carbon ring or a C1-C20 heterocyclic ring,
c represents an integer from 0 to 20,
$R_{11}$ and $R_{12}$ each independently represent hydrogen, a halogen, or an optionally substituted C1-C20 alkyl group,

C1-C5 alkoxy group, C6-C12 aryl group, C7-C17 aralkyl group or C2-C15 alkenyl group, or $R_{11}$ and $R_{12}$ bind to each other to form a C3-C20 carbon ring or a C1-C20 heterocyclic ring, and $R_{13}$-$R_{22}$ each independently represent hydrogen or a C1-C3 alkyl group),
wherein general formula (A) comprises one or more selected from the group consisting of Formulae (E)-(G) below:

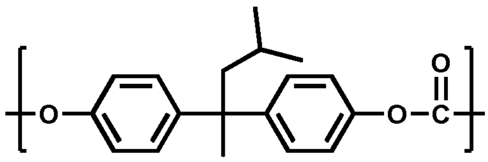
(E)

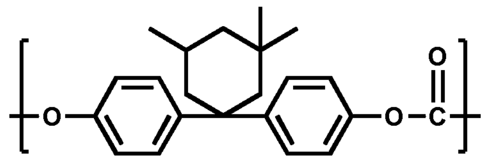
(F)

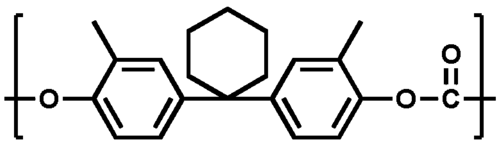
(G).

**8.** The resin composition according to Claim 7, wherein a content ratio of the structural unit (b) to the structural unit (a) [(b)/(a)] is 50/50 to 100/0 in mole ratio.

**9.** The resin composition according to Claim 7 or 8, wherein a mass ratio of the polycarbonate resin to the hydroxy compound (polycarbonate resin/hydroxy compound) is 1/99 to 50/50.

**10.** The resin composition according to any one of Claims 7 to 9, wherein a boiling point of the hydroxy compound is 50°C or higher.

**11.** The resin composition according to any one of Claims 7 to 10, wherein the hydroxy compound is one or more selected from the group consisting of butyl carbitol, ethyl carbitol, butyl cellosolve, 1-methoxy-2-propanol, 1-ethoxy-2-propanol, 1-butoxy-2-propanol, 1-methoxy-2-butanol, 2-hydroxyethyl methacrylate, and diacetone alcohol.

**12.** The resin composition according to any one of Claims 7 to 11, wherein the resin composition is a resin solution.

**13.** A printing ink comprising the resin composition according to any one of Claims 1 to 12.

**14.** A resin solution for 3D printers comprising the resin composition according to any one of Claims 1 to 12.

**15.** An electroconductive paste comprising the resin composition according to any one of Claims 1 to 12.

**16.** A coating solution comprising the resin composition according to any one of Claims 1 to 12.

**17.** A film formed of the resin composition according to any one of Claims 1 to 12.

**Patentansprüche**

**1.** Harzzusammensetzung, umfassend ein durch die folgende allgemeine Formel (1) dargestelltes Lösungsmittel und ein Polycarbonatharz, das eine durch die nachstehende allgemeine Formel (A) dargestellte Struktureinheit (a) umfasst (ausgenommen ein Polycarbonat-Homopolymer, das nur aus durch die nachstehende Formel (i) dargestellten Struktureinheit aufgebaut ist):

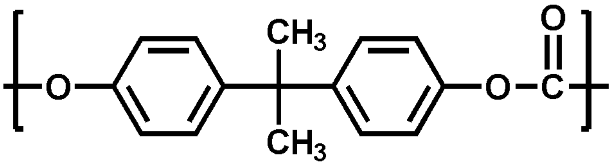
(i)

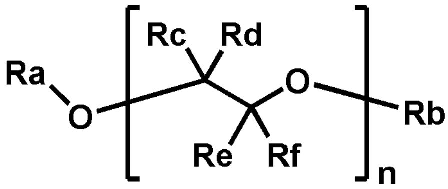
(1)

worin $R_a$ Wasserstoff oder eine optional substituierte C1-C20-Alkylgruppe, C6-C20-Arylgruppe, C2-C20-Alkenylgruppe, C7-C20-Aralkylgruppe oder C2-C20-Acylgruppe darstellt,
$R_b$ eine optional substituierte C1-C20-Alkylgruppe, C6-C20-Arylgruppe, C2-C20-Alkenylgruppe, C7-C20-Aralkylgruppe oder C2-C20-Acylgruppe darstellt,
$R_c$ - $R_f$ jeweils unabhängig Wasserstoff oder eine C1-C3-Alkylgruppe darstellen und
n eine ganze Zahl von 1 bis 10 darstellt),

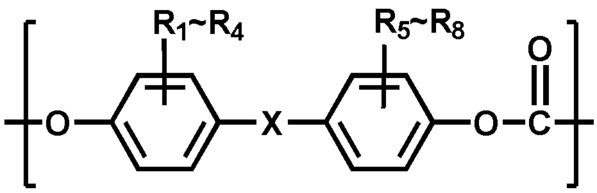
(A)

(worin $R_1$-$R_8$ jeweils unabhängig Wasserstoff, Fluor, Chlor, Brom, Iod oder eine optional substituierte C1-C7-Alkylgruppe, C6-C12-Arylgruppe, C2-C7-Alkenylgruppe, C1-C7-Alkoxygruppe oder C7-C17-Aralkylgruppe darstellen, und X -O-, -S-, -SO-, -$SO_2$-, -CO- oder eine durch irgendeine der nachstehenden Formeln (2)-(4) dargestellte divalente Gruppe darstellt):

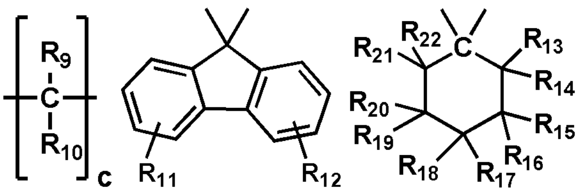
(2) (3) (4)

worin in Formeln (2)-(4) $R_9$ und $R_{10}$ jeweils unabhängig Wasserstoff, ein Halogen oder eine optional substituierte C1-C20-Alkylgruppe, C1-C5-Alkoxygruppe, C6-C12-Arylgruppe, C7-C17-Aralkylgruppe oder C2-C15-Alkenylgruppe darstellen, oder
$R_9$ und $R_{10}$ aneinander binden, um einen C3-C20-Kohlenstoffring oder einen heterocyclischen C1-C20-Ring zu bilden,
c eine ganze Zahl von 0 bis 20 darstellt,
$R_{11}$ und $R_{12}$ jeweils unabhängig Wasserstoff, ein Halogen oder eine optional substituierte C1-C20-Alkylgruppe, C1-C5-Alkoxygruppe, C6-C12-Arylgruppe, C7-C17-Aralkylgruppe oder C2-C15-Alkenylgruppe darstellen, oder
$R_{11}$ und $R_{12}$ aneinander binden, um einen C3-C20-Kohlenstoffring oder einen heterocyclischen C1-C20-Ring zu bilden, und
$R_{13}$-$R_{22}$ jeweils unabhängig Wasserstoff oder eine C1-C3-Alkylgruppe darstellen,
worin die allgemeine Formel (A) eine oder mehrere umfasst, ausgewählt aus der Gruppe bestehend aus den nachstehenden Formeln (E)-(G):

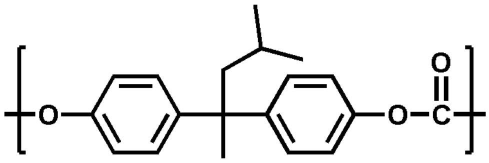
(E)

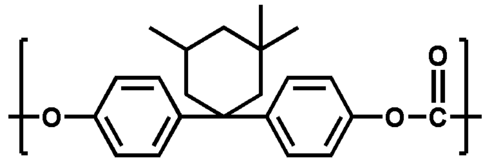
(F)

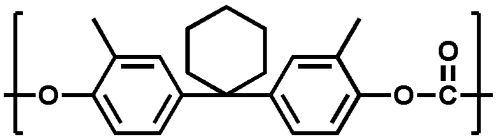
(G).

2. Harzzusammensetzung gemäß Anspruch 1, worin das Masseverhältnis des Lösungsmittels zum Polycarbonatharz (Lösungsmittel/Polycarbonatharz) 99,99/0,01 bis 50/50 beträgt.

3. Harzzusammensetzung gemäß Anspruch 1 oder 2, worin der Siedepunkt des Lösungsmittels bei 140°C oder höher liegt.

4. Harzzusammensetzung gemäß irgendeinem der Ansprüche 1 bis 3, worin in der vorstehenden allgemeinen Formel (1) $R_a$ Wasserstoff, eine C1-C6-Alkylgruppe oder eine C2-C6-Acylgruppe darstellt, $R_b$ eine C1-C6-Alkylgruppe, eine C6-C10-Arylgruppe oder eine C2-C6-Acylgruppe darstellt, $R_c$-$R_f$ Wasserstoff oder eine Methylgruppe darstellen und n eine ganze Zahl von 1 bis 4 darstellt.

5. Harzzusammensetzung gemäß Anspruch 4, worin n in der obigen allgemeinen Formel (1) 2 oder 3 ist.

6. Harzzusammensetzung gemäß irgendeinem der Ansprüche 1 bis 3, worin das durch die vorstehende allgemeine Formel (1) dargestellte Lösungsmittel eines oder mehrere umfasst, ausgewählt aus der Gruppe bestehend aus einem Lösungsmittel auf Glykolether-Basis, einem Lösungsmittel auf Glykolester-Basis und einem Lösungsmittel auf Glyme-Basis.

7. Harzzusammensetzung, umfassend ein Polycarbonatharz, dass eine durch die nachstehende allgemeine Formel (A-1) dargestellte Struktureinheit (b) und eine Hydroxyverbindung umfasst, worin

die Hydroxyverbindung durch die nachstehende allgemeine Formel (1a) oder die allgemeine Formel (1b) dargestellt ist:

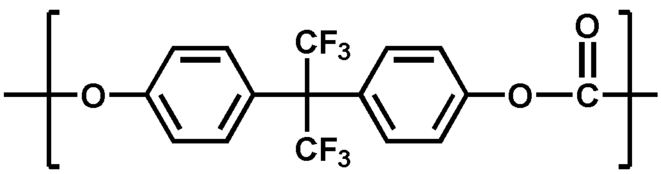
(A-1)

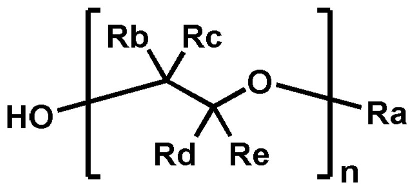
(1a)

worin in der Formel (1a) $R_a$ eine optional substituierte $C_1$-$C_{20}$-Alkylgruppe, $C_6$-$C_{20}$-Arylgruppe, $C_2$-$C_{20}$-Alkenylgruppe, C7-C20-Aralkylgruppe oder C2-C20-Acylgruppe darstellt,
$R_b$-$R_e$ jeweils unabhängig Wasserstoff oder eine $C_1$-$C_{10}$-Alkylgruppe darstellen, und
n eine ganze Zahl von 1 bis 10 darstellt:

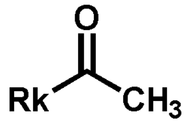
(1b)

worin in der Formel (1b) $R_k$ eine optional verzweigte C3-C20-Alkylgruppe darstellt, die eine Hydroxylgruppe aufweist,
worin das Polycarbonatharz ferner eine durch die nachstehende allgemeine Formel (A) dargestellte Struktureinheit (a) umfasst (mit Ausnahme der durch die vorstehende Allgemeine Formel (A-1) dargestellten Struktureinheit (b):

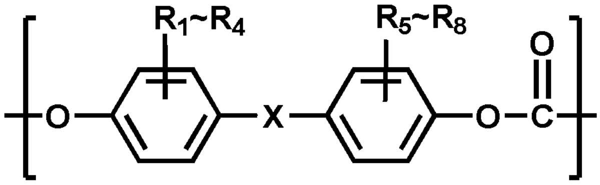
(A)

(worin in Formel (A) $R_1$-$R_8$ jeweils unabhängig Wasserstoff, Fluor, Chlor, Brom, Iod oder eine optional substituierte C1-C7-Alkylgruppe, C6-C12-Arylgruppe, C2-C7-Alkenylgruppe, C1-C7-Alkoxygruppe oder C7-C17-Aralkylgruppe darstellen, und X -O-, -S-, -SO-, $-SO_2-$, -CO- oder eine durch irgendeine der nachstehenden Formeln (2)-(4) dargestellte divalente Gruppe darstellt):

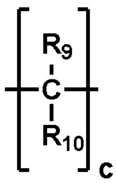 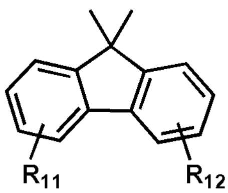 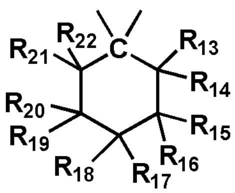
(2) (3) (4)

(worin in Formeln (2)-(4) $R_9$ und $R_{10}$ jeweils unabhängig Wasserstoff, ein Halogen oder eine optional substituierte C1-C20-Alkylgruppe, C1-C5-Alkoxygruppe, C6-C12-Arylgruppe, C7-C17-Aralkylgruppe oder C2-C15-Alkenylgruppe darstellen, oder
$R_9$ und $R_{10}$ aneinander binden, um einen C3-C20-Kohlenstoffring oder einen heterocyclischen C1-C20-Ring zu bilden,
c eine ganze Zahl von 0 bis 20 darstellt,
$R_{11}$ und $R_{12}$ jeweils unabhängig Wasserstoff, ein Halogen oder eine optional substituierte C1-C20-Alkylgruppe, C1-C5-Alkoxygruppe, C6-C12-Arylgruppe, C7-C17-Aralkylgruppe oder C2-C15-Alkenylgruppe darstellen, oder $R_{11}$ und $R_{12}$ aneinander binden, um einen C3-C20-Kohlenstoffring oder einen heterocyclischen C1-C20-Ring zu bilden, und
$R_{13}$-$R_{22}$ jeweils unabhängig Wasserstoff oder eine C1-C3-Alkylgruppe darstellen,
worin die allgemeine Formel (A) eine oder mehrere umfasst, ausgewählt aus der Gruppe bestehend aus den nachstehenden Formeln (E)-(G):

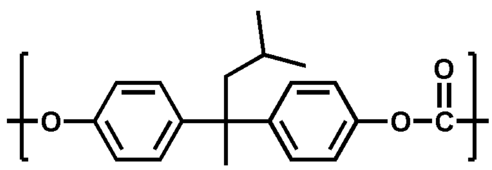
(E)

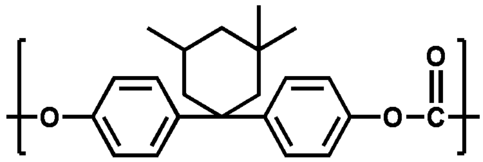

(F)

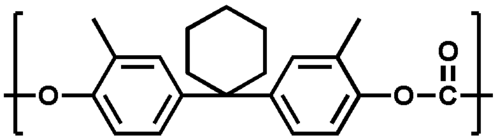

(G) .

8. Harzzusammensetzung gemäß Anspruch 7, worin das Mengenverhältnis der Struktureinheit (b) zur Struktureinheit (a) [(b)/(a)] als molares Verhältnis 50/50 bis 100/0 beträgt.

9. Harzzusammensetzung gemäß Anspruch 7 oder 8, worin das Masseverhältnis des Polycarbonatharzes zur Hydroxyverbindung (Polycarbonatharz/Hydroxyverbindung) 1/99 bis 50/50 beträgt.

10. Harzzusammensetzung gemäß irgendeinem der Ansprüche 7 bis 9, worin der Siedepunkt der Hydroxyverbindung bei 50°C oder höher liegt.

11. Harzzusammensetzung gemäß irgendeinem der Ansprüche 7 bis 10, worin die Hydroxyverbindung eine oder mehrere ist, ausgewählt aus der Gruppe bestehend aus Butylcarbitol, Ethylcarbitol, Butylcellosolve, 1-Methoxy-2-propanol, 1-Ethoxy-2-propanol, 1-Butoxy-2-propanol, 1-Methoxy-2-butanol, 2-Hydroxyethylmethacrylat und Diacetonalkohol.

12. Harzzusammensetzung gemäß irgendeinem der Ansprüche 7 bis 11, worin die Harzzusammensetzung eine Harzlösung ist.

13. Drucktinte, umfassend die Harzzusammensetzung gemäß irgendeinem der Ansprüche 1 bis 12.

14. Harzlösung für 3D-Drucker, umfassend die Harzzusammensetzung gemäß irgendeinem der Ansprüche 1 bis 12.

15. Elektrisch leitfähige Paste, umfassend die Harzzusammensetzung gemäß irgendeinem der Ansprüche 1 bis 12.

16. Beschichtungslösung, umfassend die Harzzusammensetzung gemäß irgendeinem der Ansprüche 1 bis 12.

17. Folie, gebildet aus der Harzzusammensetzung gemäß irgendeinem der Ansprüche 1 bis 12.

## Revendications

1. Composition de résine comprenant un solvant représenté par la Formule générale (1) ci-dessous et une résine polycarbonate contenant un motif structural (a) représenté par la Formule générale (A) ci-dessous (à l'exception d'un homopolymère polycarbonate composé uniquement d'un motif structural représenté par la Formule (i) ci-dessous):

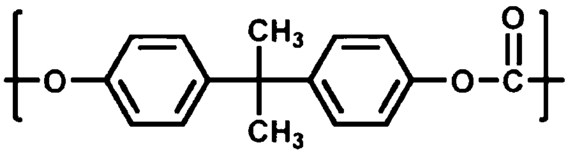

(i)

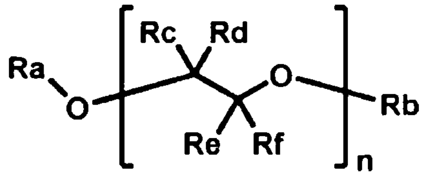

(1)

dans laquelle $R_a$ représente un hydrogène, ou un groupe alkyle en C1-C20 facultativement substitué, un groupe aryle en C6-C20 facultativement substitué, un groupe alcényle en C2-C20 facultativement substitué, un groupe aralkyle en C7-C20 facultativement substitué ou un groupe acyle en C2-C20 facultativement substitué,

$R_b$ représente un groupe alkyle en C1-C20 facultativement substitué, un groupe aryle en C6-C20 facultativement substitué, un groupe alcényle en C2-C20 facultativement substitué, un groupe aralkyle en C7-C20 facultativement substitué ou un groupe acyle en C2-C20 facultativement substitué,

$R_c$ à $R_f$ représentent chacun indépendamment un hydrogène ou un groupe alkyle en C1-C3, et n représente un nombre entier compris entre 1 et 10 ;

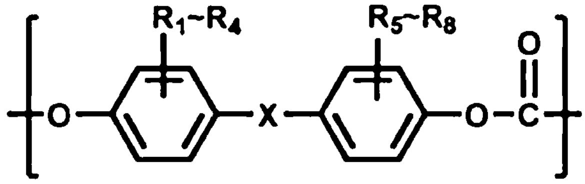

(A)

(dans laquelle $R_1$ à $R_8$ représentent chacun indépendamment un hydrogène, un fluor, un chlore, un brome, un iode, ou un groupe alkyle en C1-C7 facultativement substitué, un groupe aryle en C6-C12 facultativement substitué, un groupe alcényle en C2-C7 facultativement substitué, un groupe alcoxy en C1-C7 facultativement substitué ou un groupe aralkyle en C7-C17 facultativement substitué, et X représente -O-, -S-, -SO-, $-SO_2-$, -CO-, ou un groupe divalent représenté par une quelconque des Formules (2) à (4) ci-dessous) ;

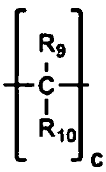

(2)

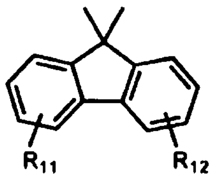

(3)

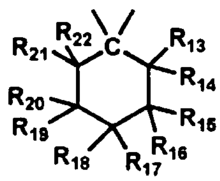

(4)

(dans les Formules (2) à (4), $R_9$ et $R_{10}$ représentent chacun indépendamment un hydrogène, un halogène, ou un groupe alkyle en C1-C20 facultativement substitué, un groupe alcoxy en C1-C5 facultativement substitué, un groupe aryle en C6-C12 facultativement substitué, un groupe aralkyle en C7-C17 facultativement substitué ou un groupe alcényle en C2-C15 facultativement substitué, ou

$R_9$ et $R_{10}$ se lient l'un à l'autre pour former un cycle carboné en C3-C20 ou un cycle hétérocyclique en C1-C20, c représente un nombre entier compris entre 0 et 20,

$R_{11}$ et $R_{12}$ représentent chacun indépendamment un hydrogène, un halogène, ou un groupe alkyle en C1-C20 facultativement substitué, un groupe alcoxy en C1-C5 facultativement substitué, un groupe aryle en C6-C12 facultativement substitué, un groupe aralkyle en C7-C17 facultativement substitué ou un groupe alcényle en C2-C15 facultativement substitué, ou

$R_{11}$ et $R_{12}$ se lient l'un à l'autre pour former un cycle carboné en C3-C20 ou un cycle hétérocyclique en C1-C20, et $R_{13}$ à $R_{22}$ représentent chacun indépendamment un hydrogène ou un groupe alkyle en C1-C3,

dans laquelle la Formule générale (A) ci-dessus comprend une ou plusieurs choisies dans le groupe consistant en les Formules (E) à (G) ci-dessous :

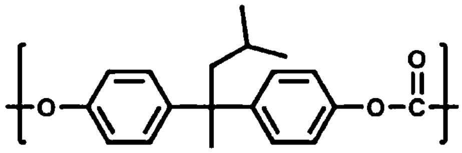

(E)

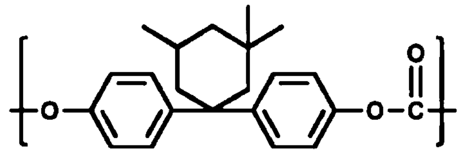

(F)

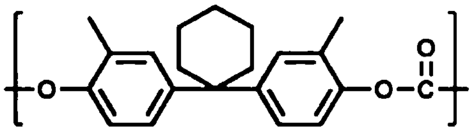

(G).

2. Composition de résine selon la revendication 1, dans laquelle un rapport massique entre le solvant et la résine polycarbonate (solvant/résine polycarbonate) est compris entre 99,99/0,01 et 50/50.

3. Composition de résine selon la revendication 1 ou la revendication 2, dans laquelle un point d'ébullition du solvant est 140 °C ou supérieur.

4. Composition de résine selon l'une quelconque des revendications 1 à 3, dans laquelle, dans la Formule générale (1) ci-dessus, $R_a$ représente un hydrogène, un groupe alkyle en C1-C6, ou un groupe acyle en C2-C6, Rb représente un groupe alkyle en C1-C6, un groupe aryle en C6-C10, ou un groupe acyle en C2-C6, $R_c$ à $R_f$ représentent un hydrogène ou un groupe méthyle, et n représente un nombre entier compris entre 1 et 4.

5. Composition de résine selon la revendication 4, dans laquelle n dans la Formule générale (1) ci-dessus est 2 ou 3.

6. Composition de résine selon l'une quelconque des revendications 1 à 3, dans laquelle le solvant représenté par la Formule générale (1) ci-dessus comprend un ou plusieurs choisis dans le groupe consistant en un solvant à base d'éther de glycol, un solvant à base d'ester de glycol, et un solvant à base de glyme.

7. Composition de résine comprenant une résine polycarbonate contenant un motif structural (b) représenté par la Formule générale (A-1) ci-dessous et un composé hydroxy, dans laquelle

   le composé hydroxy est représenté par la Formule générale (1a) ou la Formule générale (1b) ci-dessous :

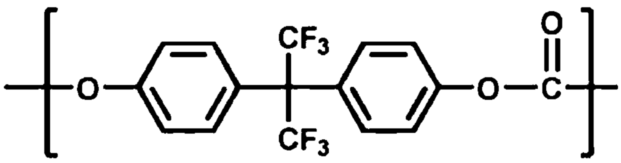

(A-1)

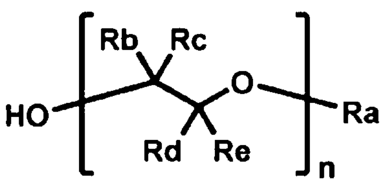

(1a)

   dans la Formule (1a), $R_a$ représente un groupe alkyle en C1-C20 facultativement substitué, un groupe aryle en C6-C20 facultativement substitué, un groupe alcényle en C2-C20 facultativement substitué, un groupe aralkyle en C7-C20 facultativement substitué ou un groupe acyle en C2-C20 facultativement substitué,

$R_b$ à $R_e$ représentent chacun indépendamment un hydrogène ou un groupe alkyle en C1-C10, et n représente un nombre entier compris entre 1 et 10 ;

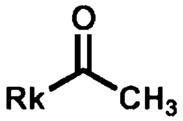
(1b)

dans la Formule (1b), $R_k$ représente un groupe alkyle en C3-C20 facultativement ramifié présentant un groupe hydroxyle,

dans laquelle la résine polycarbonate comprend en outre un motif structural (a) représenté par la Formule générale (A) ci-dessous (à l'exception du motif structural (b) représenté par la Formule générale (A-1) ci-dessus) :

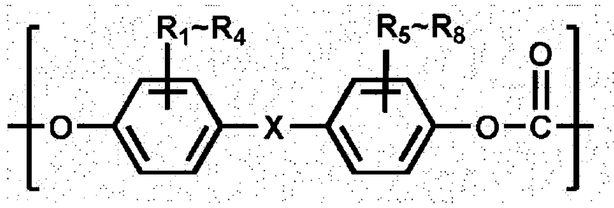
(A)

(dans la Formule (A), $R_1$ à $R_8$ représentent chacun indépendamment un hydrogène, un fluor, un chlore, un brome, un iode, ou un groupe alkyle en C1-C7 facultativement substitué, un groupe aryle en C6-C12 facultativement substitué, un groupe alcényle en C2-C7 facultativement substitué, un groupe alcoxy en C1-C7 facultativement substitué ou un groupe aralkyle en C7-C17 facultativement substitué, et X représente -O-, -S-, -SO-, $-SO_2-$, -CO-, ou un groupe divalent représenté par une quelconque des Formules (2) à (4) ci-dessous) ;

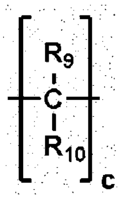
(2)
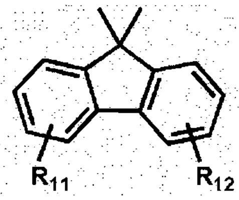
(3)
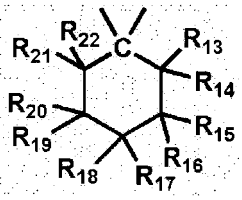
(4)

(dans les Formules (2) à (4), $R_9$ et $R_{10}$ représentent chacun indépendamment un hydrogène, un halogène, ou un groupe alkyle en C1-C20 facultativement substitué, un groupe alcoxy en C1-C5 facultativement substitué, un groupe aryle en C6-C12 facultativement substitué, un groupe aralkyle en C7-C17 facultativement substitué ou un groupe alcényle en C2-C15 facultativement substitué, ou

$R_9$ et $R_{10}$ se lient l'un à l'autre pour former un cycle carboné en C3-C20 ou un cycle hétérocyclique en C1-C20, c représente un nombre entier compris entre 0 et 20,

$R_{11}$ et $R_{12}$ représentent chacun indépendamment un hydrogène, un halogène, ou un groupe alkyle en C1-C20 facultativement substitué, un groupe alcoxy en C1-C5 facultativement substitué, un groupe aryle en C6-C12 facultativement substitué, un groupe aralkyle en C7-C17 facultativement substitué ou un groupe alcényle en C2-C15 facultativement substitué, ou

$R_{11}$ et $R_{12}$ se lient l'un à l'autre pour former un cycle carboné en C3-C20 ou un cycle hétérocyclique en C1-C20, et $R_{13}$ à $R_{22}$ représentent chacun indépendamment un hydrogène ou un groupe alkyle en C1-C3), dans laquelle la Formule générale (A) comprend une ou plusieurs choisies dans le groupe consistant en les Formules (E) à (G) ci-dessous :

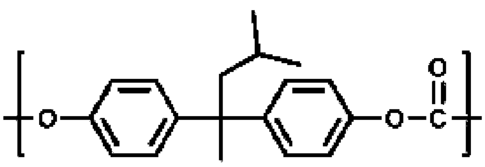
(E)

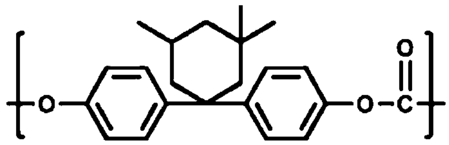

(F)

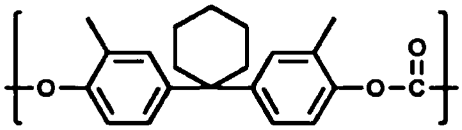

(G).

8. Composition de résine selon la revendication 7, dans laquelle un rapport de teneur entre le motif structural (b) et le motif structural (a) [(b)/(a)] est compris entre 50/50 et 100/0 en rapport molaire.

9. Composition de résine selon la revendication 7 ou la revendication 8, dans laquelle un rapport massique entre la résine polycarbonate et le composé hydroxy (résine polycarbonate/composé hydroxy) est compris entre 1/99 et 50/50.

10. Composition de résine selon l'une quelconque des revendications 7 à 9, dans laquelle un point d'ébullition du composé hydroxy est 50 °C ou supérieur.

11. Composition de résine selon l'une quelconque des revendications 7 à 10, dans laquelle le composé hydroxy est un ou plusieurs choisis dans le groupe consistant en 2-(2-butoxyéthoxy)éthanol, éthoxydiglycol, 2-butoxyéthanol, 1-méthoxy-2-propanol, 1-éthoxy-2-propanol, 1-butoxy-2-propanol, 1-méthoxy-2-butanol, méthacrylate de 2-hydroxyéthyle, et diacétone alcool.

12. Composition de résine selon l'une quelconque des revendications 7 à 11, dans laquelle la composition de résine est une solution de résine.

13. Encre d'impression comprenant la composition de résine selon l'une quelconque des revendications 1 à 12.

14. Solution de résine pour imprimantes 3D comprenant la composition de résine selon l'une quelconque des revendications 1 à 12.

15. Pâte électroconductrice comprenant la composition de résine selon l'une quelconque des revendications 1 à 12.

16. Solution de revêtement comprenant la composition de résine selon l'une quelconque des revendications 1 à 12.

17. Film formé de la composition de résine selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018123282 A
- CN 105223776 A
- JP 2013050699 A
- JP 2014160238 A
- EP 1116751 A1